(19) Europäisches Patentamt / European Patent Office / Office européen des brevets

(11) **EP 3 825 716 B1**

(12) **EUROPEAN PATENT SPECIFICATION**

(45) Date of publication and mention of the grant of the patent:
**26.04.2023  Bulletin 2023/17**

(21) Application number: **18931382.8**

(22) Date of filing: **28.08.2018**

(51) International Patent Classification (IPC):
**G01S 13/42** *(2006.01)*   **G01S 13/87** *(2006.01)*
**G01S 13/44** *(2006.01)*   **G01S 3/22** *(2006.01)*
**G01S 3/42** *(2006.01)*   **H01Q 25/02** *(2006.01)*

(52) Cooperative Patent Classification (CPC):
**G01S 13/42; G01S 13/4445; G01S 13/87**

(86) International application number:
**PCT/JP2018/031795**

(87) International publication number:
**WO 2020/044442 (05.03.2020 Gazette 2020/10)**

(54) **RADAR DEVICE AND TARGET ANGLE MEASUREMENT METHOD**

RADARVORRICHTUNG UND ZIELWINKELMESSVERFAHREN

DISPOSITIF RADAR ET PROCÉDÉ DE MESURE D'ANGLE DE CIBLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.05.2021  Bulletin 2021/21**

(73) Proprietor: **Mitsubishi Electric Corporation Tokyo 100-8310 (JP)**

(72) Inventor: **ITO, Toshihiro Tokyo 1008310 (JP)**

(74) Representative: **Pfenning, Meinig & Partner mbB Patent- und Rechtsanwälte Theresienhöhe 11a 80339 München (DE)**

(56) References cited:
WO-A1-2016/125743   JP-A- 2002 189 071
JP-A- 2002 189 071   JP-A- 2005 140 639
JP-A- 2005 295 201   JP-A- 2006 121 513
JP-A- 2008 096 137   JP-A- 2009 031 184
JP-A- 2016 205 959   JP-A- 2017 040 564
US-B2- 6 697 009

- **LONG TENG ET AL: "High accuracy unambiguous angle estimation using multi-scale combination in distributed coherent aperture radar", IET RADAR SONAR NAVIGATION, THE INSTITUTION OF ENGINEERING AND TECHNOLOGY, UK, vol. 11, no. 7, 1 July 2017 (2017-07-01), pages 1090-1098, XP006062158, ISSN: 1751-8784, DOI: 10.1049/IET-RSN.2016.0450**

EP 3 825 716 B1

## Description

### TECHNICAL FIELD

The present disclosure relates to a radar device for and a target angle measurement method of performing an angle measurement on a target.

### BACKGROUND ART

In Nonpatent Literature 1 below, a radar device having a distributed array antenna in which multiple subarray antennas are distributed is disclosed as a radar device that performs an angle measurement on a target.

The radar device disclosed in Nonpatent Literature 1 performs a digital beam forming (DBF) process, to generate multiple beams, and detects a target from the multiple beams.

Then, the radar device disclosed in Nonpatent Literature 1 performs an angle measurement in both an elevation angle direction and an azimuth angle direction in which the detected target is present.

Document US 6 697 009 B2 discloses a method for detecting a radar target of interest in the presence of radar jamming interference, said method comprising the steps of: defining a plurality of sub-arrays within an antenna array; forming a respective sum beam for each of said plurality of sub-arrays, calculating sum weights in accordance with said sum beams; and forming at least one composite sum beam in accordance with said sum weights and said sum beams for detecting said target of interest.

Document JP 2002 189071 A discloses an antenna device and a beam identifying method for detecting the arrival directions of signals received by a plurality of antenna elements.

### CITATION LIST

### NONPATENT LITERATURE

Nonpatent Literature 1: "Distributed Array Radar", R.C. HEIMILLER, J.E. BELYEA, P.G. TOMLINSON

### SUMMARY OF INVENTION

### TECHNICAL PROBLEM

In the radar device disclosed in Nonpatent Literature 1, there is a case in which the number of element antennas which some of the subarray antennas of the multiple subarray antennas have is small depending on constraints such as locations at which the multiple subarray antennas are arranged.

In the case in which the number of element antennas which some of the subarray antennas have is small, one or more grating lobes (hereinafter referred to as "GL") may occur in the antenna pattern.

A problem is that when GLs occur in the antenna pattern, errors of an angle measurement value of a target are larger than those when no GLs occur in the antenna pattern.

The present disclosure is made in order to solve the above-mentioned problem, and it is therefore an object of the present disclosure to obtain a radar device and a target angle measurement method capable of suppressing the expansion of errors of an angle measurement value even when one or more GLs occur in the antenna pattern.

### SOLUTION TO PROBLEM

The invention is set out in the appended set of claims.

### ADVANTAGEOUS EFFECTS OF INVENTION

According to the present disclosure, the radar device is configured in such a way as to include the angle measurement unit for performing a beamformer angle measurement on a target by using the sum signals generated by the multiple sum signal generation units and the difference signals generated by the multiple difference signal generation units. Therefore, the radar device according to the present disclosure can suppress the expansion of errors of an angle measurement value even when one or more GLs occur in the antenna pattern.

## BRIEF DESCRIPTION OF DRAWINGS

Fig. 1 is a block diagram showing a radar device according to Embodiment 1;

Fig. 2 is a hardware block diagram showing the hardware of a signal processing device 10 of the radar device shown in Fig. 1;

Fig. 3 is a hardware block diagram of a computer in the case in which the signal processing device 10 is implemented by software, firmware, or the like;

Fig. 4 is a flowchart showing a part of a target angle measurement method that is a processing procedure in the case in which the signal processing device 10 is implemented by software, firmware, or the like;

Fig. 5 is an explanatory drawing showing a result of comparison between a beamformer angle measurement using only sum signals, and a monopulse angle measurement in a subarray aperture;

Fig. 6 is an explanatory drawing showing the distribution of errors of an angle measurement value in the beamformer angle measurement using only sum signals, the distribution of errors of an angle measurement value in the monopulse angle measurement, and the distribution of errors of an angle measurement value in a beamformer angle measurement by an angle measurement unit 14;

Fig. 7 is a block diagram showing another radar device according to Embodiment 1;

Fig. 8 is a block diagram showing another radar device according to Embodiment 1;

Fig. 9 is a block diagram showing an angle measurement unit 14 of a radar device according to Embodiment 2;

Fig. 10 is a block diagram showing a radar device according to Embodiment 3;

Fig. 11 is a block diagram showing a radar device according to Embodiment 4; and

Fig. 12 is a block diagram showing a radar device according to Embodiment 5.

## DESCRIPTION OF EMBODIMENTS

Hereinafter, in order to explain the present disclosure in greater detail, embodiments of the present disclosure will be described with reference to the accompanying drawings.

Embodiment 1 according to the claimed invention.

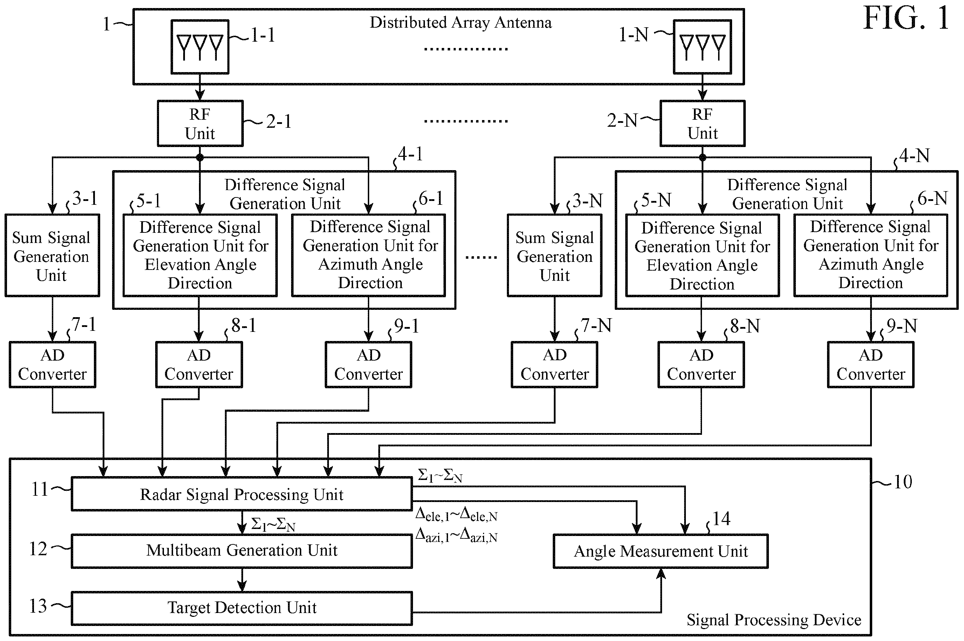

Fig. 1 is a block diagram showing a radar device according to Embodiment 1.

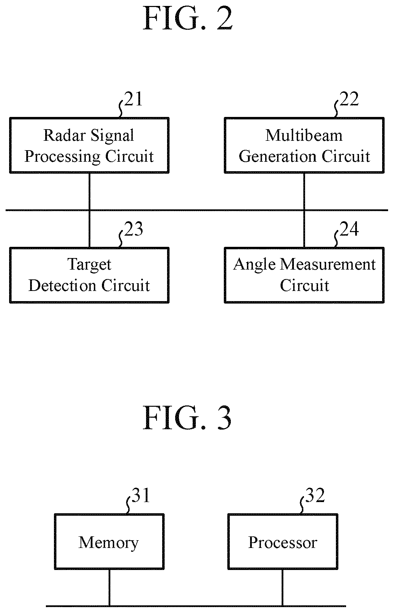

Fig. 2 is a hardware block diagram showing the hardware of a signal processing device 10 of the radar device shown in Fig. 1.

Although the radar device shown in Fig. 1 can perform both a process of transmitting an electric wave and a process of receiving an electric wave, because the radar device is characterized by the process of receiving an electric wave, a configuration for performing the process of receiving an electric wave is disclosed. Because a configuration for performing the process of transmitting an electric wave is the same as that of a typical radar device, description about this configuration is omitted in Fig. 1.

In Figs. 1 and 2, a distributed array antenna 1 is one in which multiple subarray antennas 1-1 to 1-N are distributed. N is an integer equal to or greater than 2.

The subarray antenna 1-n (n = 1, ..., N) has multiple element antennas.

The intervals at which the multiple subarray antennas 1-1 to 1-N are arranged may be equal or unequal. In the case in which the intervals at which the multiple subarray antennas 1-1 to 1-N are arranged are unequal, the influence of GLs can be reduced.

In the radar device shown in Fig. 1, the multiple subarray antennas 1-1 to 1-N are arranged one-dimensionally. However, no limitation is intended to this arrangement, and the multiple subarray antennas 1-1 to 1-N may be arranged two-dimensionally.

Radio frequency (RF) units 2-1 to 2-N are connected respectively to the subarray antennas 1-1 to 1-N.

The RF unit 2-n detects each of received signals of the multiple element antennas which the subarray antenna 1-n has, and performs amplification and so on on each of the received signals detected.

The RF unit 2-n outputs each of the received signals on which the RF unit has performed amplification and so on to both a sum signal generation unit 3-n and a difference signal generation unit 4-n.

Sum signal generation units 3-1 to 3-N are connected respectively to the RF units 2-1 to 2-N, and are implemented by, for example, adders or combiners.

The sum signal generation unit 3-n generates a sum signal $\Sigma$ about the received signals of the multiple element antennas, the received signals being outputted from the RF unit 2-n.

For example, the sum signal generation unit 3-n generates the sum signal $\Sigma_n$ by combining the received signals of the multiple element antennas, the received signals being outputted from the RF unit 2-n, in such a way that the received signals of the multiple element antennas are in phase with respect to a subarray beam direction which will be mentioned later.

The sum signal generation unit 3-n outputs the generated sum signal $\Sigma_n$ to an analog to digital converter (referred to as an "AD converter" hereafter) 7-n.

Difference signal generation units 4-1 to 4-N are connected respectively to the RF units 2-1 to 2-N.

The difference signal generation unit 4-n includes a difference signal generation unit for elevation angle direction 5-n and a difference signal generation unit for azimuth angle direction 6-n.

The difference signal generation unit 4-n generates difference signals about the received signals of the multiple element antennas, the received signals being outputted from the RF unit 2-n.

Difference signal generation units for elevation angle direction 5-1 to 5-N are connected respectively to the RF units 2-1 to 2-N, and are implemented by, for example, adders or combiners, and difference units.

The difference signal generation unit for elevation angle direction 5-n divides the aperture of the subarray antenna 1-n into two parts in an elevation angle direction.

The difference signal generation unit for elevation angle direction 5-n generates a first sum signal $\Sigma_{ele,1,n}$ by combining the received signals of the multiple element antennas for one of the two parts into which the aperture is divided in such a way that the received signals of the multiple element antennas for the one of the two parts of the aperture are in phase in the subarray beam direction.

The difference signal generation unit for elevation angle direction 5-n generates a second sum signal $\Sigma_{ele,2,n}$ by combining the received signals of the multiple element antennas for the other one of the two parts into which the aperture is divided in such a way that the received signals of the multiple element antennas for the other one of the two parts of the aperture are in phase in the subarray beam direction.

The difference signal generation unit for elevation angle direction 5-n calculates the difference between the first sum signal $\Sigma_{ele,1,n}$ and the second sum signal $\Sigma_{ele,2,n}$ as a difference signal $\Delta_{ele,n}$, and outputs the difference signal $\Delta_{ele,n}$ to an AD converter 8-n.

Difference signal generation units for azimuth angle direction 6-1 to 6-N are connected respectively to the RF units 2-1 to 2-N, and are implemented by, for example, adders or combiners, and difference units.

The difference signal generation unit for azimuth angle direction 6-n divides the aperture of the subarray antenna 1-n into two parts in an azimuth angle direction.

The difference signal generation unit for azimuth angle direction 6-n generates a first sum signal $\Sigma_{azi,1,n}$ by combining the received signals of the multiple element antennas corresponding to one of the two parts into which the aperture is divided in such a way that the received signals of the multiple element antennas corresponding to the one of the two parts of the aperture are in phase in the subarray beam direction.

The difference signal generation unit for azimuth angle direction 6-n generates a second sum signal $\Sigma_{azi,2,n}$ by combining the received signals of the multiple element antennas corresponding to the other one of the two parts into which the aperture is divided in such a way that the received signals of the multiple element antennas corresponding to the other one of the two parts of the aperture are in phase in the subarray beam direction.

The difference signal generation unit for azimuth angle direction 6-n calculates the difference between the first sum signal $\Sigma_{azi,1,n}$ and the second sum signal $\Sigma_{azi,2,n}$ as a difference signal $\Delta_{azi,n}$, and outputs the difference signal $\Delta_{azi,n}$ to an AD converter 9-n.

AD converters 7-1 to 7-N are connected respectively to the sum signal generation units 3-1 to 3-N.

The AD converter 7-n converts the sum signal $\Sigma_n$ generated by the sum signal generation unit 3-n from analog signal into digital signal.

The AD converter 7-n outputs the digital signal as digital sum signal $\Sigma_n$ to the signal processing device 10.

Here, for the sake of simplicity, the analog sum signal generated by the sum signal generation unit 3-n and the digital sum signal outputted from the AD converter 7-n are denoted by the same symbol "$\Sigma_n$."

AD converters 8-1 to 8-N are connected respectively to the difference signal generation unit for elevation angle directions 5-1 to 5-N.

The AD converter 8-n converts the difference signal $\Delta_{ele,n}$ generated by the difference signal generation unit for elevation angle direction 5-n from analog signal into digital signal.

The AD converter 8-n outputs the digital signal as digital difference signal $\Delta_{ele,n}$ to the signal processing device 10.

Here, for the sake of simplicity, the analog difference signal generated by the difference signal generation unit for elevation angle direction 5-n and the digital difference signal outputted from the AD converter 8-n are denoted by the same symbol "$\Delta_{ele,n}$."

AD converters 9-1 to 9-N are connected respectively to the difference signal generation unit for azimuth angle directions 6-1 to 6-N.

The AD converter 9-n converts the difference signal $\Delta_{azi,n}$ generated by the difference signal generation unit for azimuth angle direction 6-n from analog signal into digital signal.

The AD converter 9-n outputs the digital signal as digital difference signal $\Delta_{azi,n}$ to the signal processing device 10.

Here, for the sake of simplicity, the analog difference signal generated by the difference signal generation unit for azimuth angle direction 6-n and the digital difference signal outputted from the AD converter 9-n are denoted by the same symbol "$\Delta_{azi,n}$."

The signal processing device 10 includes a radar signal processing unit 11, a multibeam generation unit 12, a target detection unit 13, and an angle measurement unit 14.

The radar signal processing unit 11 is implemented by, for example, a radar signal processing circuit 21 shown in Fig. 2.

The radar signal processing unit 11 receives the digital sum signals $\Sigma_1$ to $\Sigma_n$ outputted from the AD converters 7-1 to 7-N, the digital difference signals $\Delta_{ele,1}$ to $\Delta_{ele,N}$ outputted from the AD converters 8-1 to 8-N, and the digital difference signals $\Delta_{azi,1}$ to $\Delta_{azi,N}$ outputted from the AD converters 9-1 to 9-N.

The radar signal processing unit 11 performs various types of signal processing on the digital sum signals $\Sigma_1$ to $\Sigma_n$, the digital difference signals $\Delta_{ele,1}$ to $\Delta_{ele,N}$, and the digital difference signals $\Delta_{azi,1}$ to $\Delta_{azi,N}$.

As the various types of signal processing, for example, well-known processes shown hereafter can be considered, and the radar signal processing unit 11 performs one or more of the following processes.

· Decimation process for reducing the processing load
· Pulse compression process for improving the gain of a target signal
· Inter-hit integrating process for improving the gain of a target signal
  Moving target indicator (MTI) process for suppressing clutters
· Side lobe clutter (SLC) process for suppressing interference waves

Here, for the sake of simplicity, the digital sum signal outputted from the AD converter 7-n and the digital sum signal after the signal processing by the radar signal processing unit 11 are denoted by the same symbol "$\Sigma_n$."

Furthermore, the digital difference signal outputted from the AD converter 8-n and the digital difference signal after the signal processing by the radar signal processing unit 11 are denoted by the same symbol "$\Delta_{ele,n}$."

Furthermore, the digital difference signal outputted from the AD converter 9-n and the digital difference signal after the signal processing by the radar signal processing unit 11 are denoted by the same symbol "$\Delta_{azi,n}$."

The radar signal processing unit 11 outputs the digital sum signal $\Sigma_n$ after the signal processing to both the multibeam generation unit 12 and the angle measurement unit 14.

The radar signal processing unit 11 outputs both the digital difference signal $\Delta_{ele,n}$ after the signal processing and the digital difference signal $\Delta_{azi,n}$ after the signal processing to the angle measurement unit 14.

The multibeam generation unit 12 is implemented by, for example, a multibeam generation circuit 22 shown in Fig. 2.

The multibeam generation unit 12 generates multiple beams including multiple DBF beams from the digital sum signals $\Sigma_1$ to $\Sigma_n$ after the signal processing by the radar signal processing unit 11.

The target detection unit 13 is implemented by, for example, a target detection circuit 23 shown in Fig. 2.

The target detection unit 13 performs a process of detecting a target from the multiple beams generated by the multibeam generation unit 12, to determine the presence or absence of a target.

The angle measurement unit 14 is implemented by, for example, an angle measurement circuit 24 shown in Fig. 2.

When a determination result of the target detection unit 13 shows that there is a target, the angle measurement unit 14 performs a beamformer angle measurement on the target.

For example, the angle measurement unit 14 performs a beamformer angle measurement on the target by using the digital sum signals $\Sigma_1$ to $\Sigma_n$ after the signal processing by the radar signal processing unit 11 and the digital difference signals $\Delta_{ele,1}$ to $\Delta_{ele,N}$ and $\Delta_{azi,1}$ to $\Delta_{azi,N}$ after the signal processing by the radar signal processing unit 11.

In Fig. 1, it is assumed that the radar signal processing unit 11, the multibeam generation unit 12, the target detection unit 13, and the angle measurement unit 14, which are the components of the signal processing device 10, are implemented by hardware for exclusive use as shown in Fig. 2. More specifically, it is assumed that the signal processing device 10 is implemented by the radar signal processing circuit 21, the multibeam generation circuit 22, the target detection circuit 23, and the angle measurement circuit 24.

Here, each of the following circuits: the radar signal calculating circuit 21, the multibeam generation circuit 22, the target detection circuit 23, and the angle measurement circuit 24 is, for example, a single circuit, a composite circuit, a programmable processor, a parallel programmable processor, an application specific integrated circuit (ASIC), a field-programmable gate array (FPGA), or a combination of these circuits.

The components of the signal processing device 10 are not limited to ones each implemented by hardware for exclusive use, and the signal processing device 10 may be implemented by software, firmware, or a combination of software and firmware.

The software or the firmware is stored as a program in a memory of a computer. The computer refers to hardware that executes a program, and is, for example, a central processing unit (CPU), a central processing device, a processing device, an arithmetic device, a microprocessor, a microcomputer, a processor, or a digital signal processor (DSP).

Fig. 3 is a hardware block diagram of the computer in the case in which the signal processing device 10 is implemented by software, firmware, or the like.

In the case in which the signal processing device 10 is implemented by software, firmware, or the like, a program for causing the computer to perform processing procedures of the radar signal processing unit 11, the multibeam generation unit 12, the target detection unit 13, and the angle measurement unit 14 is stored in a memory 31. A processor 32 of the computer then executes the program stored in the memory 31.

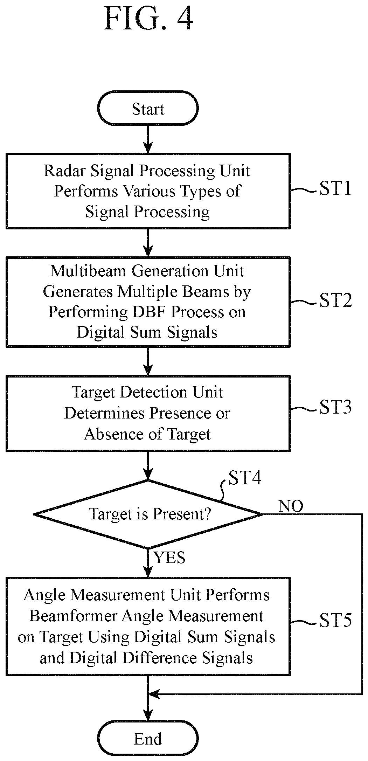

Fig. 4 is a flowchart showing a part of a target angle measurement method which is a processing procedure in the case in which the signal processing device 10 is implemented by software, firmware, or the like.

Furthermore, in Fig. 2 the example in which each of the components of the signal processing device 10 is implemented by hardware for exclusive use is shown, and in Fig. 3 the example in which the signal processing device 10 is implemented by software, firmware, or the like is shown. However, these are only examples, and some of the components in the signal processing device 10 may be implemented by hardware for exclusive use, and the remaining components may be implemented by software, firmware, or the like.

Next, the operation of the radar device shown in Fig. 1 will be explained.

Each of the subarray antennas 1-1 to 1-N arranged distributedly has multiple element antennas.

Each of the multiple element antennas that the subarray antenna 1-n (n=1, ..., N) has receives an electric wave reflected by a target for angle measurement, and outputs a received signal of the electric wave to the RF unit 2-n.

When receiving the received signals from the multiple element antennas that the subarray antenna 1-n has, the RF unit 2-n detects each of the received signals and performs amplification and so on on each of the received signals detected.

The RF unit 2-n outputs each of the received signals which the RF unit has performed amplification and so on to the sum signal generation unit 3-n, the difference signal generation unit for elevation angle direction 5-n, and the difference signal generation unit for azimuth angle direction 6-n.

When receiving the multiple received signals from the RF unit 2-n, the sum signal generation unit 3-n generates a sum signal $\Sigma_n$ by performing weighted combining of the multiple received signals in such a way that the multiple received signals are in phase with respect to the subarray beam direction.

Information showing the subarray beam direction is stored in, for example, an internal memory of the sum signal generation unit 3-n, an internal memory of the difference signal generation unit for elevation angle direction 5-n, and an internal memory of the difference signal generation unit for azimuth angle direction 6-n.

The subarray beam direction is, for example, a direction in which there is a high possibility that a target for angle measurement exists, and in which it is desired to search for a target. The subarray beam direction may be changed by, for example, an external device not illustrated.

The sum signal generation unit 3-n outputs the generated sum signal $\Sigma_n$ to the AD converter 7-n.

The difference signal generation unit for elevation angle direction 5-n divides the aperture of the subarray antenna 1-n into two parts in the elevation angle direction.

Hereafter, for the sake of simplicity in explanation, one of the two parts into which the aperture is divided in the elevation angle direction is referred to as the "first aperture", and the other one of the two parts into which the aperture is divided is referred to as the "second aperture."

The difference signal generation unit for elevation angle direction 5-n generates a first sum signal $\Sigma_{ele,1,n}$ by performing weighted combining of the received signals of the multiple element antennas corresponding to the first aperture, out of the multiple received signals outputted from the RF unit 2-n, in such a way that the received signals of the multiple element antennas corresponding to the first aperture are in phase with respect to the subarray beam direction.

Furthermore, the difference signal generation unit for elevation angle direction 5-n generates a second sum signal $\Sigma_{ele,2,n}$ by performing weighted combining of the received signals of the multiple element antennas corresponding to the second aperture in such a way that the received signals of the multiple element antennas corresponding to the second aperture are in phase with respect to the subarray beam direction.

The difference signal generation unit for elevation angle direction 5-n calculates the difference between the first sum signal $\Sigma_{ele,1,n}$ and the second sum signal $\Sigma_{ele,2,n}$ as difference signal $\Delta_{ele,n}$, and outputs the difference signal $\Delta_{ele,n}$ to the AD converter 8-n.

The difference signal generation unit for azimuth angle direction 6-n divides the aperture of the subarray antenna 1-n into two parts in the azimuth angle direction.

Hereafter, for the sake of simplicity in explanation, one of the two parts into which the aperture is divided in the azimuth angle direction is referred to as the "third aperture", and the other one of the two parts into which the aperture is divided is referred to as the "fourth aperture."

The difference signal generation unit for azimuth angle direction 6-n generates a first sum signal $\Sigma_{azi,1,n}$ by performing weighted combining of the received signals of the multiple element antennas corresponding to the third aperture, out of the multiple received signals outputted from the RF unit 2-n, in such a way that the received signals of the multiple element antennas corresponding to the third aperture are in phase with respect to the subarray beam direction.

The difference signal generation unit for azimuth angle direction 6-n generates a second sum signal $\Sigma_{azi,2,n}$ by performing weighted combining of the received signals of the multiple element antennas corresponding to the fourth aperture in such a way that the received signals of the multiple element antennas corresponding to the fourth aperture are in phase with respect to the subarray beam direction.

The difference signal generation unit for azimuth angle direction 6-n calculates the difference between the first sum signal $\Sigma_{azi,1,n}$ and the second sum signal $\Sigma_{azi,2,n}$ as difference signal $\Delta_{azi,n}$, and outputs the difference signal $\Delta_{azi,n}$ to the AD converter 9-n.

When receiving the sum signal $\Sigma_n$ from the sum signal generation unit 3-n, the AD converter 7-n converts the sum signal $\Sigma_n$ from the analog signal into a digital signal.

The AD converter 7-n outputs the digital signal as a digital sum signal $\Sigma_n$ to the radar signal processing unit 11.

When receiving the difference signal $\Delta_{ele,n}$ from the difference signal generation unit for elevation angle direction 5-n, the AD converter 8-n converts the difference signal $\Delta_{ele,n}$ from analog signal into digital signal.

The AD converter 8-n outputs the digital signal as digital difference signal $\Delta_{ele,n}$ to the radar signal processing unit 11.

When receiving the difference signal $\Delta_{azi,n}$ from the difference signal generation unit for azimuth angle direction 6-n, the AD converter 9-n converts the difference signal $\Delta_{azi,n}$ from analog signal into digital signal.

The AD converter 9-n outputs the digital signal as digital difference signal $\Delta_{azi,n}$ to the radar signal processing unit 11.

The radar signal processing unit 11 performs various types of signal processing on the digital sum signals $\Sigma_1$ to $\Sigma_n$, the digital difference signals $\Delta_{ele,1}$ to $A_{ele,N}$, and the digital difference signals $\Delta_{azi,1}$ to $\Delta_{azi,N}$ (step ST1 of Fig. 4) .

The radar signal processing unit 11 outputs the digital sum signal $\Sigma_n$ after the signal processing to both the multibeam generation unit 12 and the angle measurement unit 14.

The radar signal processing unit 11 outputs both the digital difference signal $\Delta_{ele,n}$ after the signal processing and the digital difference signal $\Delta_{azi,n}$ after the signal processing to the angle measurement unit 14.

When receiving the digital sum signal $\Sigma_n$ after the signal processing from the radar signal processing unit 11, the multibeam generation unit 12 performs a DBF process on the digital sum signals $\Sigma_1$ to $\Sigma_n$ after the signal processing.

The multibeam generation unit 12 generates multiple beams including multiple DBF beams acquired by performing the DBF process (step ST2 of Fig. 4). Because the DBF process itself is a known technique, a detailed explanation will be omitted.

The multiple beams generated by the multibeam generation unit 12 are beams created by an antenna aperture having the same size as the entire antenna aperture (herein referred to as the "distributed aperture") of the distributed array antenna 1.

Therefore, the multiple beams are narrower than and have a higher gain than the subarray beam of the single subarray antenna 1-n.

Because the DBF process is digital processing, the DBF beams can be generated simultaneously toward multiple directions. The multibeam generation unit 12 can improve the gain of the multiple beams by filling the inside of the multiple beams with the multiple DBF beams.

The target detection unit 13 performs the process of detecting a target from the multiple beams by performing, for example, a well-known constant false alarm rate (CFAR) process, to determine the presence or absence of a target (step ST3 of Fig. 4).

The target detection unit 13 outputs a determination result showing the presence or absence of a target to the angle measurement unit 14.

When the determination result of the target detection unit 13 shows that there is a target (when Yes in step ST4 of Fig. 4), the angle measurement unit 14 performs a beamformer angle measurement on the target (step ST5 of Fig. 4) .

When the determination result of the target detection unit 13 shows that there is no target (when No in step ST4 of Fig. 4), the angle measurement unit 14 does not perform the target beamformer angle measurement to reduce the processing load.

The target beamformer angle measurement is an angle measurement using the distributed aperture.

The beamformer angle measurement by the angle measurement unit 14 is the one searching for the target and performing an angle measurement on the target within the subarray beam corresponding to each of the subarray antennas 1-1 to 1-N, by using the digital sum signals $\Sigma_1$ to $\Sigma_n$, and the digital difference signals $\Delta_{ele,1}$ to $\Delta_{ele,N}$ and $\Delta_{azi,1}$ to $\Delta_{azi,N}$.

Hereafter, the target angle measurement process by the angle measurement unit 14 will be explained concretely.

While changing $\theta$ showing the elevation angle direction and $\phi$ showing the azimuth angle direction in the following equation (1), the angle measurement unit 14 searches for $\theta$ and $\phi$ which maximize the value of the right side.

$$\{\hat{\theta}_{\Sigma\Delta BF}, \hat{\phi}_{\Sigma\Delta BF}\} = \arg\max \frac{\boldsymbol{a}_{\Sigma\Delta}^{H}(\theta, \phi)\widetilde{\boldsymbol{R}}_{\Sigma\Delta\Sigma\Delta}\boldsymbol{a}_{\Sigma\Delta}(\theta, \phi)}{\boldsymbol{a}_{\Sigma\Delta}^{H}(\theta, \phi)\boldsymbol{a}_{\Sigma\Delta}(\theta, \phi)} \qquad (1)$$

In the equation (1), $\theta_{\Sigma\Delta BF}$ hat is $\theta$ at which the value of the right side is maximized, and is a search result in the elevation angle direction of the target.

$\phi_{\Sigma\Delta BF}$ hat is $\phi$ at which the value of the right side is maximized, and is a search result in the azimuth angle direction of the target.

Because the symbol "^" cannot be attached onto the tops of "$\theta$" and "$\phi$" in the document of the specification under the constrains on electronic applications, they are expressed like $\theta_{\Sigma\Delta BF}$ hat and $\phi_{\Sigma\Delta BF}$ hat.

$R_{\Sigma\Delta\Sigma\Delta}$ tilde is a correlation matrix which has, as its elements, the complex amplitude in the range in which the target is detected and the complex amplitude in the Doppler frequency, in the digital sum signals $\Sigma_1$ to $\Sigma_n$, the digital difference signals $\Delta_{ele,1}$ to $A_{ele,N}$, and the digital difference signals $\Delta_{azi,1}$ to $\Delta_{azi,N}$. Because the correlation matrix $R_{\Sigma\Delta\Sigma\Delta}$ tilde itself is a well-known matrix, a detailed explanation will be omitted. The range in which the target is detected is the distance from the radar device to the target.

Because the symbol "~" cannot be attached onto the top of "R" in the document of the specification under the constrains on electronic applications, it is expressed like $R_{\Sigma\Delta\Sigma\Delta}$ tilde.

Because when the process of detecting a target is performed, the range in which the target is detected and the Doppler frequency are typically calculated by the target detection unit 13, the angle measurement unit 14 may acquire the range and the Doppler frequency from the target detection unit 13.

As an alternative, the angle measurement unit 14 may calculate the range and the Doppler frequency by performing the process of detecting a target.

$a_{\Sigma\Delta}(\theta, \phi)$ is a steering vector which has, as its elements, the theoretical relative amplitudes and relative phases of the digital sum signals $\Sigma_1$ to $\Sigma_n$, the digital difference signals $\Delta_{ele,1}$ to $A_{ele,N}$, and the digital difference signals $\Delta_{azi,1}$ to $\Delta_{azi,N}$, with respect to the direction of $(\theta, \phi)$.

$a_{\Sigma\Delta}(\theta, \phi)$ can be calculated from pieces of known information including the arrangement of the subarray antennas 1-1 to 1-N, the arrangement of the element antennas which each of the subarray antennas 1-1 to 1-N has, and the frequencies of the signals received by the subarray antennas 1-1 to 1-N.

H is a symbol showing complex conjugate transpose.

The steering vector $a_{\Sigma\Delta}$ is expressed by the following equation (2).

$$\boldsymbol{a}_{\Sigma\Delta} = \left[\boldsymbol{a}_{\Sigma}^{T}, \boldsymbol{a}_{\Delta ele}^{T}, \boldsymbol{a}_{\Delta azi}^{T}\right]^{T} \qquad (2)$$

In the equation (2), T is a symbol showing transpose.

$a_{\Sigma\Delta}$ is expressed by the following equation (3), $a_{\Delta ele}$ is expressed by the following equation (4), and $a_{\Delta azi}$ is expressed by the following equation (5).

$$\boldsymbol{a}_{\Sigma} = \left[a_{\Sigma,1}, a_{\Sigma,2}, \cdots a_{\Sigma,N}\right]^{T} \qquad (3)$$

$$\boldsymbol{a}_{\Delta ele} = \left[a_{\Delta ele,1}, a_{\Delta ele,2}, \cdots a_{\Delta ele,N}\right]^{T} \qquad (4)$$

$$\boldsymbol{a}_{\Delta azi} = \left[a_{\Delta azi,1}, a_{\Delta azi,2}, \cdots a_{\Delta azi,N}\right]^{T} \qquad (5)$$

In the equations (3) to (5), each vector on the right side corresponds to the theoretical relative amplitudes and relative phases of the digital sum signals $\Sigma_1$ to $\Sigma_n$, the digital difference signals $\Delta_{ele,1}$ to $\Delta_{ele,N}$, or the digital difference signals $\Delta_{azi,1}$ to $\Delta_{azi,N}$.

In the above-mentioned way, the search result $\theta_{\Sigma\Delta BF}$ hat in the elevation angle direction of the target and the search result $\phi_{\Sigma\Delta BF}$ hat in the azimuth angle direction of the target are acquired by the angle measurement unit 14.

Hereafter, an explanation will be made as to the principle that the degradation in the angle measuring accuracy which is caused by GLs is reduced because the digital sum signals $\Sigma_1$ to $\Sigma_n$ and the digital difference signals $\Delta_{ele,1}$ to $\Delta_{ele,N}$ and $\Delta_{azi,1}$ to $\Delta_{azi,N}$ are used in the target angle measurement process by the angle measurement unit 14.

In an angle measurement process on a target by using a distributed array antenna in which multiple subarray antennas are arranged, a method of improving the angle measuring accuracy by effectively using the characteristics of the distributed aperture having a large aperture is adopted.

For example, in Nonpatent Literature 2 below, an angle measurement process of performing a beamformer angle measurement on a target by using only sum signals about received signals of multiple element antennas which multiple subarray antennas have is disclosed.

[Nonpatent Literature 2] Nobuyoshi Kikuma, "Adaptive Antenna Technique", Ohmsha, Ltd., 2003.

In Nonpatent Literature 3 below, an angle measurement process of generating each difference signal about received signals of multiple element antennas which a subarray antenna has, and performing a monopulse angle measurement in the subarray aperture which is the aperture of a subarray antenna, by using the difference signals is disclosed.

[Nonpatent Literature 3] Takashi Yoshida, "Revised Radar Technique", Corona Publishing Co., Ltd., 1996.

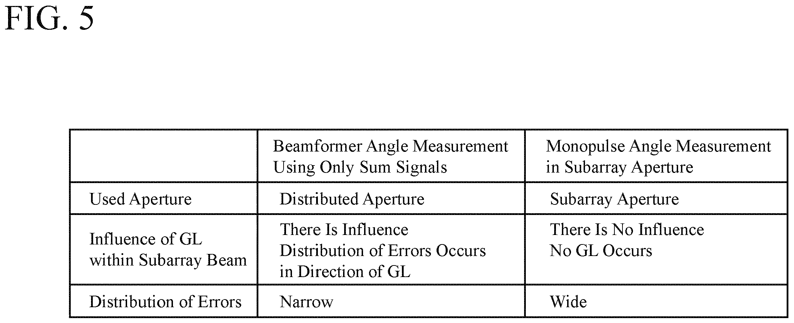

Fig. 5 is an explanatory drawing showing a result of comparison between a beamformer angle measurement using only sum signals, and a monopulse angle measurement in a subarray aperture.

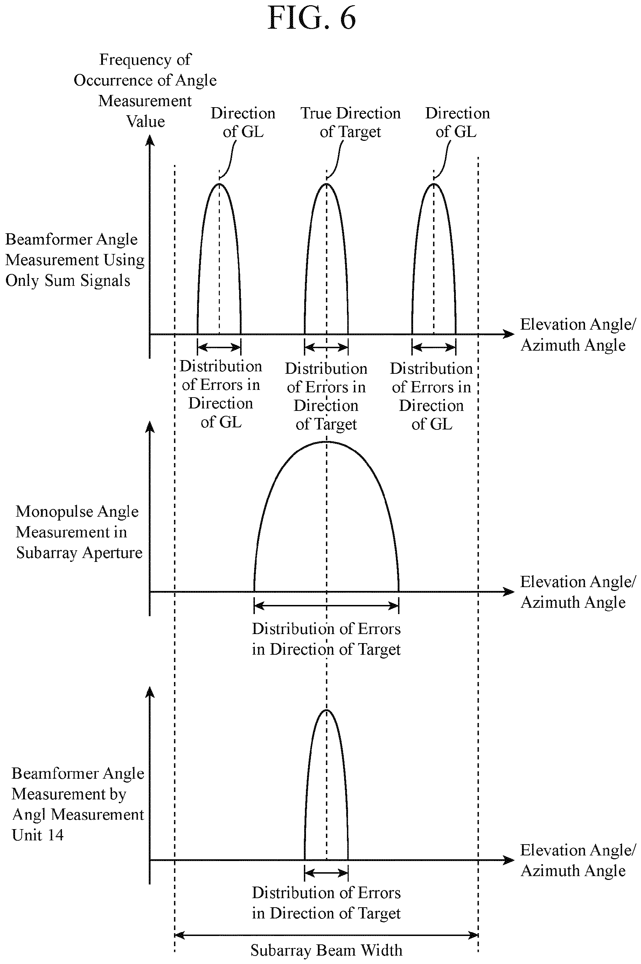

Fig. 6 is an explanatory drawing showing the distribution of errors of an angle measurement value in the beamformer angle measurement using only sum signals, the distribution of errors of an angle measurement value in the monopulse angle measurement, and the distribution of errors of an angle measurement value in the beamformer angle measurement by the angle measurement unit 14.

The beamformer angle measurement using only sum signals provides a high degree of angle measuring accuracy because the beamformer angle measurement is an angle measurement process using a large distributed aperture in principle.

However, in the case in which the number of element antennas which some of the multiple subarray antennas have is small, one or more GLs may occur in the antenna pattern. In the beamformer angle measurement using only sum signals, when a GL occurs, the direction in which the GL occurs may be detected erroneously as the direction in which a target is present.

In the beamformer angle measurement using only sum signals, the erroneous detection of the direction in which the GL occurs as the direction in which the target is present provides an angle measurement processing result showing that a distribution of errors occurs also in directions in which GLs occur, in addition to that a distribution of errors occurs in the direction of the target, as shown in Fig. 6.

The monopulse angle measurement in a subarray aperture is not an angle measurement process in the distributed aperture, but an angle measurement process in the subarray aperture. Therefore, because the search scope for the target is within a subarray beam and the monopulse angle measurement is not an angle measurement process in a large aperture, the angle measurement process is not affected by GLs.

However, because the aperture length of a subarray aperture is narrower than the aperture length of the distributed aperture, in the monopulse angle measurement in a subarray aperture, the distribution of errors in the direction of the target spreads over a wider region than the distribution of errors in the direction of the target in the beamformer angle measurement using only sum signals, as shown in Fig. 6.

As mentioned above, the beamformer angle measurement using only sum signals and the monopulse angle measurement in a subarray aperture have merits and demerits.

In the beamformer angle measurement by the angle measurement unit 14, the beamformer angle measurement is performed using both the sum signals and the difference signals in order to provide the merit of the beamformer angle measurement using only sum signals and the merit of the monopulse angle measurement in a subarray aperture.

In the beamformer angle measurement by the angle measurement unit 14, by performing a beamformer angle measurement using both the sum signals and the difference signals, the distribution of errors in the direction of the target becomes narrow and a high degree of angle measuring accuracy is provided without a distribution of errors in the direction of GL occurring, as shown in Fig. 6.

In above-mentioned Embodiment 1, the radar device is configured in such a way as to include the angle measurement unit 14 for performing a beamformer angle measurement on a target by using the sum signals generated by the multiple sum signal generation units 3-1 to 3-N and the difference signals generated by the multiple difference signal generation units 4-1 to 4-N. Therefore, the radar device can suppress the expansion of errors of the angle measurement value even when one or more GL occur in the antenna pattern.

In the radar device shown in Fig. 1, the example in which the difference signal generation unit 4-n (n=1, ..., N) includes the difference signal generation unit for elevation angle direction 5-n and the difference signal generation unit for azimuth angle direction 6-n is shown.

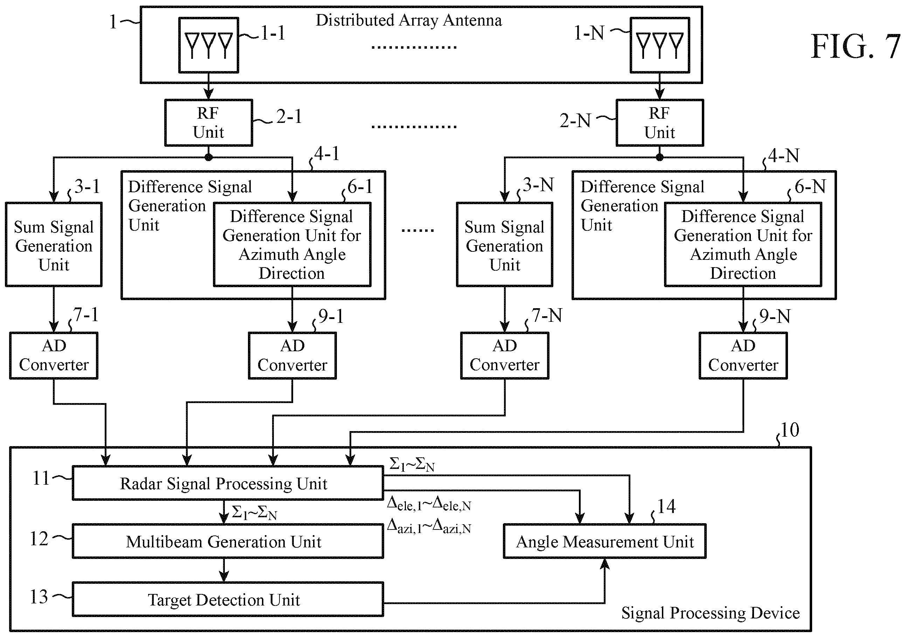

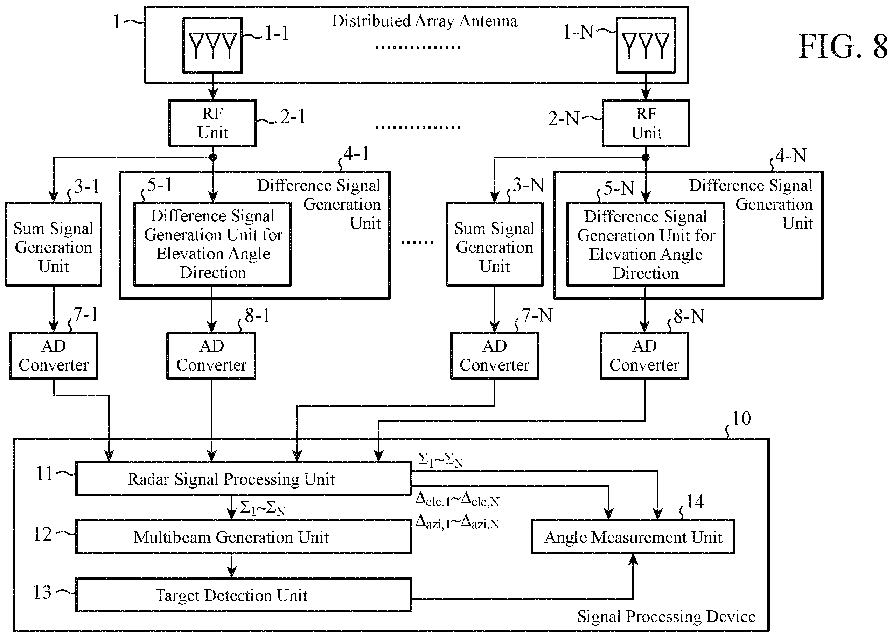

However, this is only an example, and the radar device may be one in which the difference signal generation unit 4-n includes only the difference signal generation unit for azimuth angle direction 6-n, as shown in Fig. 7. As an alternative, the radar device may be one in which the difference signal generation unit 4-n includes only the difference signal generation unit for elevation angle direction 5-n, as shown in Fig. 8.

Figs. 7 and 8 are block diagrams showing other radar devices according to Embodiment 1.

In the case in which the difference signal generation unit 4-n includes only the difference signal generation unit for azimuth angle direction 6-n, the AD converter 8-n is unnecessary. The angle measurement unit 14 performs a beamformer angle measurement on a target by using the digital sum signals $\Sigma_1$ to $\Sigma_n$ and the digital difference signals $\Delta_{azi,1}$ to $\Delta_{azi,n}$.

In the case in which the angle measurement unit 14 uses the digital sum signals $\Sigma_1$ to $\Sigma_n$ and the digital difference signals $\Delta_{azi,1}$ to $\Delta_{azi,n}$, the steering vector $a_{\Sigma\Delta}$ is expressed by the following equation (6).

$$ \boldsymbol{a}_{\Sigma\Delta} = \left[ \boldsymbol{a}_{\Sigma}^{\mathrm{T}}, \boldsymbol{a}_{\Delta azi}^{\mathrm{T}} \right]^{\mathrm{T}} \qquad (6) $$

In the case in which the difference signal generation unit 4-n includes only the difference signal generation unit for elevation angle direction 5-n, the AD converter 9-n is unnecessary. The angle measurement unit 14 performs a beamformer angle measurement on a target by using the digital sum signals $\Sigma_1$ to $\Sigma_n$ and the digital difference signals $\Delta_{ele,1}$ to $\Delta_{ele,n}$.

In the case in which the angle measurement unit 14 uses the digital sum signals $\Sigma_1$ to $\Sigma_n$ and the digital difference signals $\Delta_{ele,1}$ to $\Delta_{ele,N}$, the steering vector $a_{\Sigma\Delta}$ is expressed by the following equation (7).

$$ \boldsymbol{a}_{\Sigma\Delta} = \left[ \boldsymbol{a}_{\Sigma}^{\mathrm{T}}, \boldsymbol{a}_{\Delta ele}^{\mathrm{T}} \right]^{\mathrm{T}} \qquad (7) $$

Even in the case in which the difference signal generation unit 4-n includes either the difference signal generation unit for azimuth angle direction 6-n or the difference signal generation unit for elevation angle direction 5-n, the expansion of errors of the angle measurement value which is caused by the occurrence of GLs can be suppressed to be less than that in the case in which the beamformer angle measurement is performed using only the digital sum signals $\Sigma_1$ to $\Sigma_n$.

In the radar device shown in Fig. 7, the difference signal generation unit 4-n includes only the difference signal generation unit for azimuth angle direction 6-n, and in the radar device shown in Fig. 8, the difference signal generation unit 4-n includes only the difference signal generation unit for elevation angle direction 5-n.

However, these are only examples, and in the multiple difference signal generation units 4-1 to 4-N, difference signal generation units each of which includes only a difference signal generation unit for azimuth angle direction and difference signal generation units each of which includes only a difference signal generation unit for elevation angle direction may be mixed.

In the radar device shown in Fig. 1, each of the subarray antennas 1-1 to 1-N has multiple element antennas.

The number of element antennas which each of the subarray antennas 1-1 to 1-N has may be equal or may differ.

In the case in which the number of element antennas which each of the subarray antennas 1-1 to 1-N has differs, each element in the vectors $a_{\Sigma\Delta}$, $a_{\Delta ele}$, and $a_{\Delta azi}$ has an amplitude value in which the difference in the number of element antennas is reflected. As the difference in the number of element antennas, the difference in the signal to noise ratio in each of the subarray antennas 1-1 to 1-N can be considered.

In the radar device shown in Fig. 1, the angle measurement unit 14 performs angle measurements both in the elevation angle direction of a target and in the azimuth angle direction of the target. However, no limitation is intended to this example, and the angle measurement unit 14 may perform an angle measurement either in the elevation angle direction of a target or in the azimuth angle direction of the target.

Embodiment 2, a further embodiment of the invention as claimed.

The radar device shown in Fig. 1 includes the angle measurement unit 14 that performs a beamformer angle measurement on a target by using the sum signals generated by the multiple sum signal generation units 3-1 to 3-N and the difference signals generated by the multiple difference signal generation units 4-1 to 4-N.

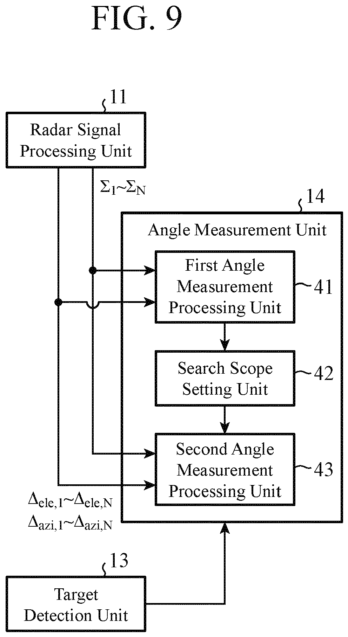

In Embodiment 2, a radar device in which an angle measurement unit 14 includes a first angle measurement processing unit 41, a search scope setting unit 42, and a second angle measurement processing unit 43, as shown in Fig. 9, will be explained.

Fig. 9 is a block diagram showing the angle measurement unit 14 of the radar device according to Embodiment 2. The configuration of components of the radar device other than the angle measurement unit 14 shown in Fig. 9 is the same as that of Fig. 1.

In Fig. 9, the first angle measurement processing unit 41 changes the direction of searching for a target in steps of a first stepsize within a subarray beam corresponding to each of multiple subarray antennas 1-1 to 1-N.

The first angle measurement processing unit 41 performs a beamformer angle measurement on a target by using digital sum signals $\Sigma_1$ to $\Sigma_n$ and digital difference signals $\Delta_{ele,1}$ to $\Delta_{ele,N}$ and $\Delta_{azi,1}$ to $\Delta_{azi,N}$ while changing the target searching direction in steps of the first stepsize.

The first stepsize is substantially equal to the beam width of each DBF beam. Therefore, the search for a target while changing the target searching direction in steps of the first stepsize is a rough one, and the angle measurement process by the first angle measurement processing unit 41 is a rough one.

The search scope setting unit 42 sets up a target search scope by using an angle measurement result of the beamformer angle measurement performed by the first angle measurement processing unit 41.

As a search center in an elevation angle direction in the target search scope, the search scope setting unit 42 sets up $\theta_{\Sigma\Delta BF}$ hat in the elevation angle direction, $\theta_{\Sigma\Delta BF}$ hat being shown by the angle measurement result of the first angle measurement processing unit 41, for example. Furthermore, as a search center in an azimuth angle direction in the target search scope, the search scope setting unit 42 sets up $\phi_{\Sigma\Delta BF}$ hat in the azimuth angle direction, $\phi_{\Sigma\Delta BF}$ hat being shown by the angle measurement result of the first angle measurement processing unit 41, for example.

The search scope may be wider than the first stepsize, and is narrower than the beam width of each subarray beam.

The second angle measurement processing unit 43 changes the target searching direction in steps of a second stepsize within the search scope set up by the search scope setting unit 42.

The second angle measurement processing unit 43 performs a beamformer angle measurement on a target by using the digital sum signals $\Sigma_1$ to $\Sigma_n$ and the digital difference signals $\Delta_{ele,1}$ to $\Delta_{ele,N}$ and $\Delta_{azi,1}$ to $\Delta_{azi,N}$ while changing the target searching direction in steps of the second stepsize.

The second stepsize is finer than the first stepsize.

Next, the operation of the angle measurement unit 14 shown in Fig. 9 will be explained.

Because the components other than the angle measurement unit 14 shown in Fig. 9 are the same as those of the radar device shown in Fig. 1, an explanation will be omitted hereafter.

When a determination result of the target detection unit 13 shows that there is a target, the first angle measurement processing unit 41 performs a beamformer angle measurement on the target.

The first angle measurement processing unit 41 performs a beamformer angle measurement on the target by using the digital sum signals $\Sigma_1$ to $\Sigma_n$ and the digital difference signals $\Delta_{ele,1}$ to $\Delta_{ele,N}$ and $\Delta_{azi,1}$ to $\Delta_{azi,N}$ while changing the target searching direction in steps of the first stepsize within each subarray beam.

In the beamformer angle measurement in the first angle measurement processing unit 41, both $\theta$ showing the elevation angle direction and $\phi$ showing the azimuth angle direction are changed in steps of the first stepsize in the above-mentioned equation (1).

Because the angle measurement process by the first angle measurement processing unit 41 is a rough one, the arithmetic load is small, but the angle measurement result of the first angle measurement processing unit 41 contains a large error.

In order to provide an angle measurement value having a small error, the search scope setting unit 42 sets up a target search scope, as the target search scope used for the implementation of a fine search, by using the angle measurement result of the beamformer angle measurement performed by the first angle measurement processing unit 41.

As the search center in the elevation angle direction in the target search scope, the search scope setting unit 42 sets up $\theta_{\Sigma\Delta BF}$ hat in the elevation angle direction, $\theta_{\Sigma\Delta BF}$ hat being shown by the angle measurement result of the first angle measurement processing unit 41, for example. Further, as the search center in the azimuth angle direction in the target search scope, the search scope setting unit 42 sets up $\phi_{\Sigma\Delta BF}$ hat in the azimuth angle direction, $\phi_{\Sigma\Delta BF}$ hat being shown by the angle measurement result of the first angle measurement processing unit 41, for example.

The search scope setting unit 42 sets the width of the search scope to be wider than the first stepsize and narrower than the beam width of each subarray beam, for example.

The second angle measurement processing unit 43 performs a beamformer angle measurement on the target by using the digital sum signals $\Sigma_1$ to $\Sigma_n$ and the digital difference signals $\Delta_{ele,1}$ to $\Delta_{ele,N}$ and $\Delta_{azi,1}$ to $\Delta_{azi,N}$ while changing the target searching direction in steps of the second stepsize within the search scope set up by the search scope setting unit 42.

In the beamformer angle measurement in the second angle measurement processing unit 43, both $\theta$ showing the elevation angle direction and $\phi$ showing the azimuth angle direction are changed in steps of the second stepsize in the above-mentioned equation (1).

Because the second stepsize is finer than the first stepsize, the error contained in an angle measurement result of the second angle measurement processing unit 43 is small.

Because the search scope set up by the search scope setting unit 42 has a width narrower than the beam width of each subarray beam, the arithmetic load is smaller than that when making a search within each subarray beam.

In above-mentioned Embodiment 2, the angle measurement unit 14 includes the first angle measurement processing unit 41 that performs a beamformer angle measurement on a target by using the sum signals and the difference signals while changing the target searching direction in steps of the first stepsize within each subarray beam.

Further, the angle measurement unit 14 includes the search scope setting unit 42 that sets up the target search scope by using the angle measurement result of the beamformer angle measurement performed by the first angle measurement processing unit 41.

In addition, the angle measurement unit 14 includes the second angle measurement processing unit 43 that performs a beamformer angle measurement on the target by using the sum signals and the difference signals while changing the target searching direction in steps of the second stepsize within the search scope set up by the search scope setting unit 42.

Therefore, the radar device of Embodiment 2 can reduce the arithmetic load to be smaller than that of the radar device of Embodiment 1. Furthermore, the radar device of Embodiment 2 can suppress the expansion of errors of the angle measurement value even when GLs occur in the antenna pattern, like that of Embodiment 1.

Embodiment 3, a further embodiment of the invention as claimed.

In the radar device shown in Fig. 1, the multibeam generation unit 12 generates multiple beams from the digital sum signals $\Sigma_1$ to $\Sigma_n$.

In Embodiment 3, an explanation will be made as to a radar device in which a multibeam generation unit 51 generates multiple beams from digital sum signals $\Sigma_1$ to $\Sigma_n$, and digital difference signals $\Delta_{ele,1}$ to $\Delta_{ele,N}$ and $\Delta_{azi,1}$ to $\Delta_{azi,N}$.

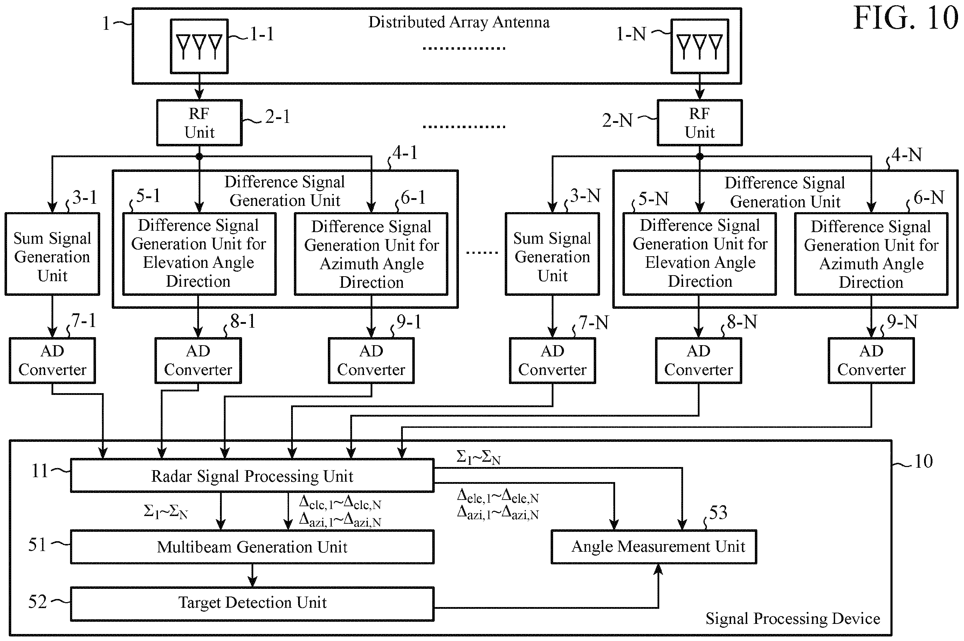

Fig. 10 is a block diagram showing the radar device according to Embodiment 3. In Fig. 10, because the same reference signs as those shown in Fig. 1 denote the same components or like components, an explanation of the components will be omitted hereafter.

The multibeam generation unit 51 is implemented by, for example, a multibeam generation circuit 22 shown in Fig. 2.

The multibeam generation unit 51 generates multiple beams including multiple DBF beams from the digital sum signals $\Sigma_1$ to $\Sigma_n$ after signal processing by a radar signal processing unit 11, and the digital difference signals $\Delta_{ele,1}$ to $\Delta_{ele,N}$ and $\Delta_{azi,1}$ to $\Delta_{azi,N}$ after the signal processing by the radar signal processing unit 11.

A target detection unit 52 is implemented by, for example, the target detection circuit 23 shown in Fig. 2.

The target detection unit 52 performs a process of detecting a target from the multiple beams generated by the multibeam generation unit 51, and specifies a DBF beam in which the target is present out of the multiple DBF beams included in the multiple beams.

An angle measurement unit 53 is implemented by, for example, the angle measurement circuit 24 shown in Fig. 2.

If a target is detected by the target detection unit 52, then the angle measurement unit 53 sets the beam scope of the DBF beam specified by the target detection unit 52 as a target search scope.

The angle measurement unit 53 performs a beamformer angle measurement on the target within the set search scope, by using the digital sum signals $\Sigma_1$ to $\Sigma_n$ and the digital difference signals $\Delta_{ele,1}$ to $\Delta_{ele,N}$ and $\Delta_{azi,1}$ to $\Delta_{azi,N}$ obtained after the signal processing by the radar signal processing unit 11.

Next, the operation of the radar device shown in Fig. 10 will be explained.

Note that, because the components other than the multibeam generation unit 51, the target detection unit 52, and the angle measurement unit 53 are the same as those of the radar device shown in Fig. 1, only the operations of the multibeam generation unit 51, the target detection unit 52, and the angle measurement unit 53 will be explained hereafter.

When receiving the digital sum signals $\Sigma_n$ and the digital difference signals $\Delta_{ele,1}$ to $\Delta_{ele,N}$ and $\Delta_{azi,1}$ to $\Delta_{azi,N}$ after the signal processing from the radar signal processing unit 11, the multibeam generation unit 51 performs a DBF process on the digital sum signals $\Sigma_n$ and the digital difference signals $\Delta_{ele,1}$ to $\Delta_{ele,N}$ and $\Delta_{azi,1}$ to $\Delta_{azi,N}$.

The multibeam generation unit 51 generates multiple beams including multiple DBF beams which are acquired by performing the DBF process.

Although a detailed explanation will be omitted because the DBF process itself is a known technique, GLs can be prevented from occurring in the antenna pattern because the multibeam generation unit 51 uses not only the digital sum signals $\Sigma_n$ but also the digital difference signals $\Delta_{ele,1}$ to $\Delta_{ele,N}$ and $\Delta_{azi,1}$ to $\Delta_{azi,N}$.

The target detection unit 52 detects a target from the multiple beams by performing, for example, a well-known CFAR process.

When detecting a target, the target detection unit 52 specifies the DBF beam in which the target is present, out of the multiple DBF beams included in the multiple beams, and outputs both the elevation angle direction and the azimuth angle direction of the specified DBF beam to the angle measurement unit 53.

Because the occurrence of GLs is suppressed by the multibeam generation unit 51, the detecting accuracy of a target in the target detection unit 52 is higher than the detecting accuracy of a target in the target detection unit 13 shown in Fig. 1.

If a target is detected by the target detection unit 52, then the angle measurement unit 53 sets the beam scope of the DBF beam specified by the target detection unit 52 as the target search scope.

The angle measurement unit 53 performs a beamformer angle measurement on the target within the set search scope by using the digital sum signals $\Sigma_1$ to $\Sigma_n$ and the digital difference signals $\Delta_{ele,1}$ to $\Delta_{ele,N}$ and $\Delta_{azi,1}$ to $\Delta_{azi,N}$ obtained after the signal processing by the radar signal processing unit 11.

In the beamformer angle measurement by the angle measurement unit 53, both $\theta$ showing the elevation angle direction and $\phi$ showing the azimuth angle direction are changed, in the above-mentioned equation (1), in steps of, for example, the above-mentioned second stepsize.

Because the search scope set up by the angle measurement unit 53 has a width narrower than the beam width of each subarray beam, the arithmetic load is smaller than that when making a search within each subarray beam.

In above-mentioned Embodiment 3, the multibeam generation unit 51 that generates multiple beams including multiple DBF beams from the sum signals and the difference signals is included.

Furthermore, the target detection unit 52 that performs the process of detecting a target from the multiple beams generated by the multibeam generation unit 51 and specifies the DBF beam in which the target is present out of the multiple DBF beams included in the multiple beams is included.

In addition, the angle measurement unit 53 that sets the beam scope of the DBF beam specified by the target detection unit 52 as the target search scope, and performs a beamformer angle measurement on the target within the set search scope by using the sum signals and the difference signals is included.

Therefore, the radar device of Embodiment 3 can suppress the expansion of errors of an angle measurement value even when GLs occur in the antenna pattern.

Embodiment 4, a further embodiment of the invention as claimed.

According to the radar device shown in Fig. 1, the angle measurement unit 14 performs a beamformer angle measurement on a target.

In Embodiment 4, a radar device in which an angle measurement unit 61 performs a monopulse angle measurement instead of performing a beamformer angle measurement on a target will be explained.

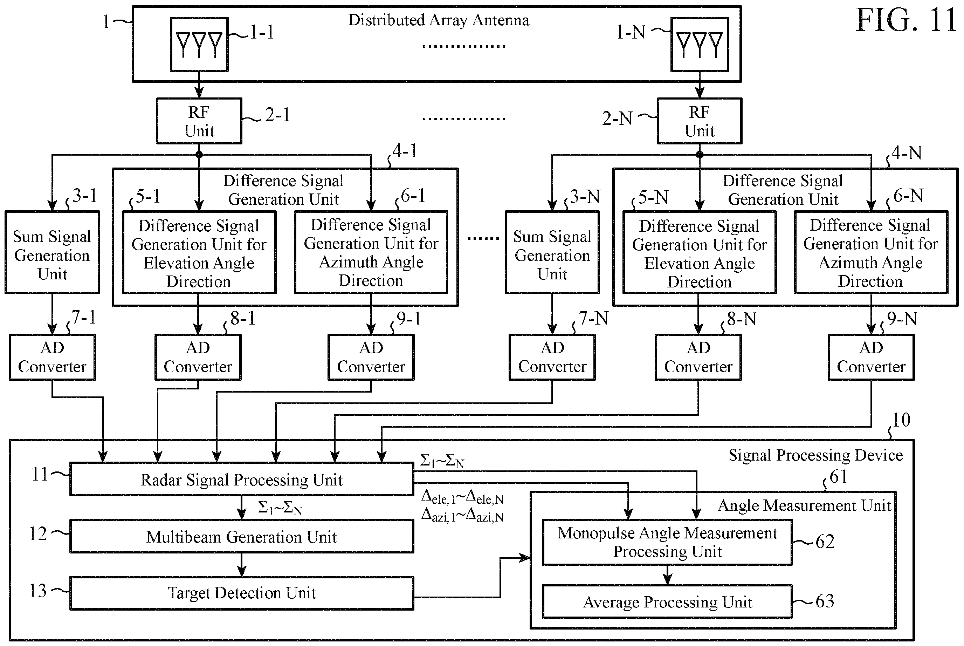

Fig. 11 is a block diagram showing the radar device according to Embodiment 4. In Fig. 11, because the same reference signs as those shown in Fig. 1 denote the same components or like components, an explanation of the components will be omitted hereafter.

The angle measurement unit 61 is implemented by, for example, the angle measurement circuit 24 shown in Fig. 2, and includes a monopulse angle measurement processing unit 62 and an average processing unit 63.

The angle measurement unit 61 performs a monopulse angle measurement on a target within the subarray beam corresponding to each of multiple subarray antennas 1-1 to 1-N, by using digital sum signals $\Sigma_1$ to $\Sigma_n$ and digital difference signals $\Delta_{ele,1}$ to $\Delta_{ele,N}$ and $\Delta_{azi,1}$ to $\Delta_{azi,N}$ obtained after signal processing by a radar signal processing unit 11.

The angle measurement unit 61 performs weighted averaging on angle measurement results of the monopulse angle measurement within each subarray beam.

The monopulse angle measurement processing unit 62 performs a monopulse angle measurement on the target within each subarray beam by using the digital sum signals $\Sigma_1$ to $\Sigma_n$ and the digital difference signals $\Delta_{ele,1}$ to $\Delta_{ele,N}$ and $\Delta_{azi,1}$ to $\Delta_{azi,N}$ obtained after the signal processing by the radar signal processing unit 11.

The average processing unit 63 performs the weighted averaging on the angle measurement results of the monopulse angle measurement within each subarray beam, the angle measurement results being provided by the monopulse angle measurement processing unit 62.

Next, the operation of the radar device shown in Fig. 11 will be explained.

However, because the components other than the angle measurement unit 61 is the same as those of the radar device shown in Fig. 1, only the operation of the angle measurement unit 61 will be explained hereafter.

If a determination result of the target detection unit 13 shows that a target is present, the monopulse angle measurement processing unit 62 performs a monopulse angle measurement on the target within each subarray beam.

The monopulse angle measurement on the target is an angle measurement using the subarray aperture.

The monopulse angle measurement by the monopulse angle measurement processing unit 62 is the one in which the target is searched for and an angle measurement is performed on the target by using the digital sum signals $\Sigma_1$ to $\Sigma_n$ and the digital difference signals $\Delta_{ele,1}$ to $\Delta_{ele,N}$ and $\Delta_{azi,1}$ to $\Delta_{azi,N}$ obtained after the signal processing by the radar signal processing unit 11.

Because the monopulse angle measurement itself is a known technique, a detailed explanation will be omitted. The monopulse angle measurement has the merit of being not affected by GLs but has the demerit of providing a wide distribution of errors in the direction of the target.

The average processing unit 63 performs the weighted averaging on angle measurement results of the monopulse angle measurement within each subarray beam, the angle measurement results being provided by the monopulse angle measurement processing unit 62.

Specifically, the average processing unit 63 performs the weighted averaging on an angle measurement result in an elevation angle direction within each subarray beam.

Furthermore, the average processing unit 63 performs the weighted averaging on an angle measurement result in an azimuth angle direction within each subarray beam.

The average processing unit 63 can narrow the distribution of errors in the target direction by performing the weighted averaging on the angle measurement results of the monopulse angle measurement within each subarray beam.

In above-mentioned Embodiment 4, the angle measurement unit 61 performs a monopulse angle measurement on a target, instead of performing a beamformer angle measurement on the target, within each subarray beam by using the sum signals and the difference signals. Furthermore, the radar device is configured in such a way that the angle measurement unit 61 performs the weighted averaging on angle measurement results of the monopulse angle measurement within each subarray beam. Therefore, the radar device of Embodiment 4 can suppress the expansion of errors of an angle measurement value even when GL occurs in the antenna pattern.

Embodiment 5, a further embodiment of the invention as claimed.

In Embodiment 5, an angle measurement unit 61 sets up a target search scope by using an angle measurement result on which weighted averaging is performed. An explanation will be made as to a radar device in which the angle measurement unit 61 then performs a beamformer angle measurement on a target within the set-up search scope by using digital sum signals $\Sigma_1$ to $\Sigma_n$ after signal processing by a radar signal processing unit 11.

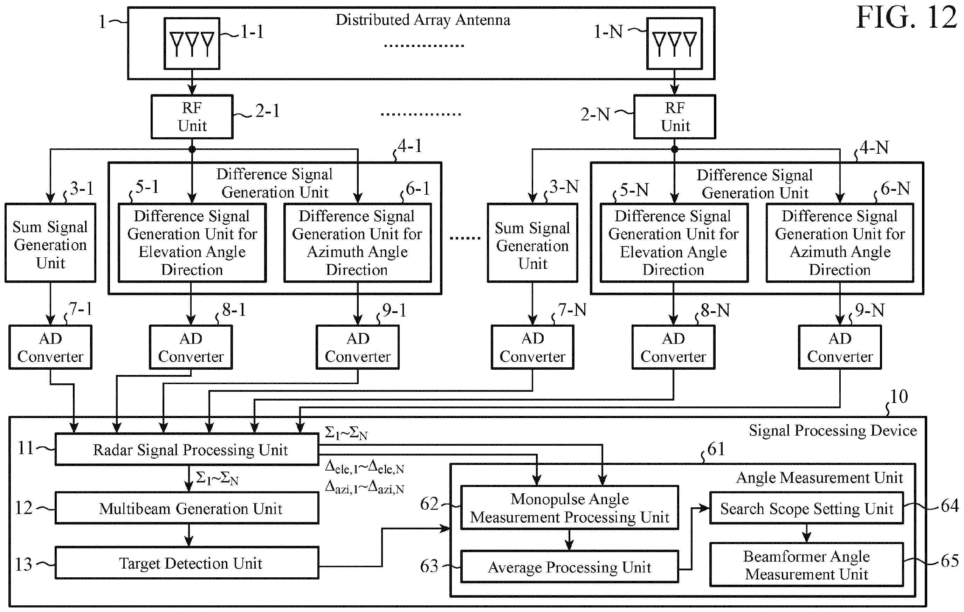

Fig. 12 is a block diagram showing the radar device according to Embodiment 5. In Fig. 12, because the same reference signs as those shown in Figs. 1 and 11 denote the same components or like components, an explanation of the components will be omitted hereafter.

A search scope setting unit 64 sets up a target search scope by using the angle measurement result on which the weighted averaging is performed by an average processing unit 63.

A beamformer angle measurement unit 65 performs a beamformer angle measurement on a target within the search scope set up by the search scope setting unit 64 by using the digital sum signals $\Sigma_1$ to $\Sigma_n$ after the signal processing by the radar signal processing unit 11.

Next, the operation of the radar device shown in Fig. 12 will be explained.

However, because the components other than the search scope setting unit 64 and the beamformer angle measurement unit 65 are the same as those of the radar device shown in Fig. 11, only the operations of the search scope setting unit 64 and the beamformer angle measurement unit 65 will be explained hereafter.

When receiving the angle measurement result after the weighted averaging from the average processing unit 63, the search scope setting unit 64 specifies the DBF beam containing an elevation angle direction and an azimuth angle direction which are shown by the angle measurement result after the weighted averaging, out of multiple DBF beams included in multiple beams.

The search scope setting unit 64 sets the beam scope of the specified DBF beam as the target search scope.

The beamformer angle measurement unit 65 performs a beamformer angle measurement on a target within the search scope set up by the search scope setting unit 64 by using the digital sum signals $\Sigma_1$ to $\Sigma_n$ after the signal processing by the radar signal processing unit 11.

Specifically, while changing both $\theta$ showing the elevation angle direction and $\phi$ showing the azimuth angle direction in the following equation (8) within the search scope set up by the search scope setting unit 64, the beamformer angle measurement unit 65 searches for $\theta$ and $\phi$ which maximize the value of the right side.

$$\left\{\hat{\theta}_{\Sigma BF}, \hat{\phi}_{\Sigma BF}\right\} = \arg\max \frac{\boldsymbol{a}_{\Sigma}^{H}(\theta,\phi)\widetilde{\boldsymbol{R}}_{\Sigma\Sigma}\boldsymbol{a}_{\Sigma}(\theta,\phi)}{\boldsymbol{a}_{\Sigma}^{H}(\theta,\phi)\boldsymbol{a}_{\Sigma}(\theta,\phi)} \qquad (8)$$

In the equation (8), $\theta_{\Sigma BF}$ hat is $\theta$ at which the value of the right side is maximized, and is a search result in the elevation angle direction of the target.

$\phi_{\Sigma BF}$ hat is $\phi$ at which the value of the right side is maximized, and is a search result in the azimuth angle direction of the target.

$R_{\Sigma\Sigma}$ tilde is a correlation matrix which has, as its elements, the complex amplitude in the range in which the target is detected and the complex amplitude in the Doppler frequency, in the digital sum signals $\Sigma_1$ to $\Sigma_n$. Because the correlation matrix $R_{\Sigma\Sigma}$ tilde itself is a well-known matrix, a detailed explanation will be omitted.

$a_{\Sigma}(\theta, \phi)$ is a steering vector which has, as its elements, the theoretical relative amplitudes and relative phases of the digital sum signals $\Sigma_1$ to $\Sigma_n$ with respect to the direction of $(\theta, \phi)$.

$a_{\Sigma}(\theta, \phi)$ can be calculated from pieces of known information including the arrangement of subarray antennas 1-1 to 1-N, the arrangement of the element antennas which each of the subarray antennas 1-1 to 1-N has, and the frequencies of the signals received by the subarray antennas 1-1 to 1-N.

The steering vector $a_{\Sigma}$ is expressed by the following equation (9).

$$\boldsymbol{a}_{\Sigma} = \left[a_{\Sigma,1}, a_{\Sigma,2}, \cdots a_{\Sigma,N}\right]^{\mathrm{T}} \qquad (9)$$

In the equation (9), each vector on the right side corresponds to the theoretical relative amplitudes and relative phases of the digital sum signals $\Sigma_1$ to $\Sigma_n$.

In above-mentioned Embodiment 5, the radar device is configured in such a manner that the angle measurement unit 61 sets up the target search scope by using the angle measurement result on which the weighted averaging is performed, and performs a beamformer angle measurement on a target within the set-up search scope by using the sum signals. Therefore, the radar device of Embodiment 5 can improve the angle measuring accuracy compared with the radar device of Embodiment 4.

**INDUSTRIAL APPLICABILITY**

The present disclosure is suitable for a radar device for and a target angle measurement method of performing an angle measurement on a target.

**REFERENCE SIGNS LIST**

1 distributed array antenna, 1-1 to 1-N subarray antenna, 2-1 to 2-N RF unit, 3-1 to 3-N sum signal generation unit, 4-1 to 4-N difference signal generation unit, 5-1 to 5-N difference signal generation unit for elevation angle direction, 6-1 to 6-N difference signal generation unit for azimuth angle direction, 7-1 to 7-N AD converter, 8-1 to 8-N AD converter, 9-1 to 9-N AD converter, 10 signal processing device, 11 radar signal processing unit, 12 multibeam generation unit, 13 target detection unit, 14 angle measurement unit, 21 radar signal processing circuit, 22 multibeam generation circuit, 23 target detection circuit, 24 angle measurement circuit, 31 memory, 32 processor, 41 first angle measurement processing unit, 42 search scope setting unit, 43 second angle measurement processing unit, 51 multibeam generation unit, 52 target detection unit, 53 angle measurement unit, 61 angle measurement unit, 62 monopulse angle measurement processing unit, 63 average processing unit, 64 search scope setting unit, and 65 beamformer angle measurement unit.

**Claims**

1. A radar device comprising:

   multiple subarray antennas (1-1 to 1-N) each having multiple element antennas;
   multiple sum signal generation units (3-1 to 3-N) respectively connected to the multiple subarray antennas (1-1 to 1-N), for each generating a sum signal of signals of the multiple element antennas which each of the subarray antennas (1-1 to 1-N) has;
   multiple difference signal generation units (4-1 to 4-N) respectively connected to the multiple subarray antennas (1-1 to 1-N), for each generating a difference signal of the signals of the multiple element antennas (1-1 to 1-N) which each of the subarray antennas has (1-1 to 1-N); and
   an angle measurement unit (14; 53; 61) for performing a beamformer angle measurement on a target by searching for one or more angles of the target using the sum signals generated by the multiple sum signal generation units (3-1 to 3-N) and the difference signals generated by the multiple difference signal generation units (4-1 to 4-N);
   wherein the multiple sum signal generation units (3-1 to 3-N) generate the sum signals by combining the signals of the multiple element antennas in such a way that the signals of the multiple element antennas which each of the subarray antennas (1-1 to 1-N) has are in phase in a subarray beam direction,
   **characterized in that** the multiple difference signal generation units (4-1 to 4-N) each generate a first sum signal by dividing an aperture of each of the subarray antennas (1-1 to 1-N) into two parts, and combining signals of multiple element antennas for one of the two parts into which the aperture is divided, out of the multiple element antennas which each of the subarray antennas (1-1 to 1-N) has, in such a way that the signals of the multiple element antennas for the one of the two parts into which the aperture is divided are in phase in the subarray beam direction and also generate a second sum signal by combining signals of multiple element antennas for another one of the two parts into which the aperture is divided, out of the multiple element antennas which each of the subarray antennas (1-1 to 1-N) has, in such a way that the signals of the multiple element antennas for the other one of the two parts into which the aperture is divided are in phase in the subarray beam direction, and calculate a difference between the first sum signal and the second sum signal as the difference signal, wherein the subarray beam direction is changeable.

2. The radar device according to claim 1, wherein the radar device comprises:

   a multibeam generation unit (12) for generating multiple beams from the sum signals generated by the multiple sum signal generation units (3-1 to 3-N); and
   a target detection unit (13) for performing a process of detecting a target from the multiple beams generated by the multibeam generation unit (12), to determine presence or absence of a target,
   wherein the angle measurement unit (14) performs a beamformer angle measurement on a target if a determination result of the target detection unit (13) shows that the target is present.

3. The radar device according to claim 1, wherein the multiple difference signal generation units (4-1 to 4-N) each include at least one of:

a difference signal generation unit for elevation angle direction (5-1 to 5-N) for, when generating each of the first and second sum signals, generating a difference signal in an elevation angle direction by dividing the aperture of each of the subarray antennas (1-1 to 1-N) into two parts in the elevation angle direction, and

a difference signal generation unit for azimuth angle direction (6-1 to 6-N) for, when generating each of the first and second sum signals, generating a difference signal in an azimuth angle direction by dividing the aperture of each of the subarray antennas (1-1 to 1-N) into two parts in the azimuth angle direction, and

output at least one of the difference signal in the elevation angle direction and the difference signal in the azimuth angle direction to the angle measurement unit (14; 53; 61).

4. The radar device according to claim 1, wherein the angle measurement unit (14), as the beamformer angle measurement on the target, searches for the target within a subarray beam corresponding to each of the multiple subarray antennas (1-1 to 1-N) and performs an angle measurement on the target, by using the sum signals generated by the multiple sum signal generation units (3-1 to 3-N) and the difference signals generated by the multiple difference signal generation units (4-1 to 4-N).

5. The radar device according to claim 1, wherein the angle measurement unit (14) comprises:

a first angle measurement processing unit (41) for performing a beamformer angle measurement on the target by using the sum signals generated by the multiple sum signal generation units (3-1 to 3-N) and the difference signals generated by the multiple difference signal generation units (4-1 to 4-N), while changing a direction of searching for the target in steps of a first stepsize within a subarray beam corresponding to each of the multiple subarray antennas (1-1 to 1-N);

a search scope setting unit (42) for setting up a search scope for the target by using an angle measurement result of the first angle measurement processing unit (41); and

a second angle measurement processing unit (43) for performing a beamformer angle measurement on the target by using the sum signals generated by the multiple sum signal generation units (3-1 to 3-N) and the difference signals generated by the multiple difference signal generation units (4-1 to 4-N), while changing the target searching direction in steps of a second stepsize finer than the first stepsize within the search scope set up by the search scope setting unit (42).

6. The radar device according to claim 1, wherein the radar device comprises:

a multibeam generation unit (51) for generating multiple beams including multiple digital beam forming, DBF, beams from the sum signals generated by the multiple sum signal generation units (3-1 to 3-N) and the difference signals generated by the multiple difference signal generation units (4-1 to 4-N); and

a target detection unit (52) for performing a process of detecting a target from the multiple beams generated by the multibeam generation unit (51), and for specifying a DBF beam in which a detected target is present out of the multiple DBF beams,

and wherein the angle measurement unit (53) sets a beam range of the DBF beam specified by the target detection unit (52) as a search scope for targets, and performs a beamformer angle measurement on the target within the search scope, by using the sum signals generated by the multiple sum signal generation units (3-1 to 3-N) and the difference signals generated by the multiple difference signal generation units (4-1 to 4-N).

7. The radar device according to claim 1, wherein the angle measurement unit (61) performs a monopulse angle measurement on the target, instead of performing a beamformer angle measurement on the target, within a subarray beam corresponding to each of the multiple subarray antennas (1-1 to 1-N), by using the sum signals generated by the multiple sum signal generation units (3-1 to 3-N) and the difference signals generated by the multiple difference signal generation units (4-1 to 4-N), and performs weighted averaging on a measurement result of the monopulse angle measurement within the subarray beam corresponding to each of the multiple subarray antennas (1-1 to 1-N).

8. The radar device according to claim 7, wherein the angle measurement unit (61) sets up a search scope for the target by using an angle measurement result on which the weighted averaging is performed, and performs a beamformer angle measurement on the target within the search scope by using the sum signals generated by the multiple sum signal generation units (3-1 to 3-N).

9. The radar device according to claim 1, wherein the multiple subarray antennas (1-1 to 1-N) are arranged at unequal intervals.

10. The radar device according to claim 1, wherein the angle measurement unit (14; 53; 61) performs an angle measurement in either an elevation angle direction of the target or an azimuth angle direction of the target.

11. The radar device according to claim 1, wherein the angle measurement unit (14; 53; 61) performs an angle measurement in both an elevation angle direction of the target and an azimuth angle direction of the target.

12. A target angle measurement method comprising:

generating, by multiple sum signal generation units (3-1 to 3-N) respectively connected to multiple subarray antennas (1-1 to 1-N) having multiple element antennas, a sum signal of signals of the multiple element antennas which each of the subarray antennas (1-1 to 1-N) has;

generating, by multiple difference signal generation units (4-1 to 4-N) respectively connected to the multiple subarray antennas (1-1 to 1-N), a difference signal of the signals of the multiple element antennas which each of the subarray antennas has (1-1 to 1-N); and

performing, by an angle measurement unit (14; 53; 61), a beamformer angle measurement on a target by searching for one or more angles of the target using the sum signals generated by the multiple sum signal generation units (3-1 to 3-N) and the difference signals generated by the multiple difference signal generation units (4-1 to 4-N);

wherein the multiple sum signal generation units (3-1 to 3-N) generate the sum signals by combining the signals of the multiple element antennas in such a way that the signals of the multiple element antennas which each of the subarray antennas (1-1 to 1-N) has are in phase in a subarray beam direction,

**characterized in that** the multiple difference signal generation units (4-1 to 4-N) each generate a first sum signal by dividing an aperture of each of the subarray antennas (1-1 to 1-N) into two parts, and combining signals of multiple element antennas for one of the two parts into which the aperture is divided, out of the multiple element antennas which each of the subarray antennas (1-1 to 1-N) has, in such a way that the signals of the multiple element antennas for the one of the two parts into which the aperture is divided are in phase in the subarray beam direction and also generate a second sum signal by combining signals of multiple element antennas for another one of the two parts into which the aperture is divided, out of the multiple element antennas which each of the subarray antennas (1-1 to 1-N) has, in such a way that the signals of the multiple element antennas for the other one of the two parts into which the aperture is divided are in phase in the subarray beam direction, and calculate a difference between the first sum signal and the second sum signal as the difference signal, wherein the subarray beam direction is changeable.

## Patentansprüche

1. Radareinrichtung, umfassend:

mehrere Subarray-Antennen (1-1 bis 1-N), jeweils aufweisend mehrere Elementantennen;

mehrere Summensignal-Erzeugungseinheiten (3-1 bis 3-N), die jeweils mit den mehreren Subarray-Antennen (1-1 bis 1-N) verbunden sind, um jeweils ein Summensignal von Signalen der mehreren Element-Antennen, welche jede der Subarray-Antennen (1-1 bis 1-N) aufweist, zu erzeugen;

mehrere Differenzsignal-Erzeugungseinheiten (4-1 bis 4- N), die jeweils mit den mehreren Subarray-Antennen (1-1 bis 1-N) verbunden sind, um jeweils ein Differenzsignal der Signale der mehreren Elementantennen (1-1 bis 1-N), welche jede der Subarray-Antennen (1-1 bis 1-N) aufweist, zu erzeugen; und

eine Winkelmesseinheit (14; 53; 61) zum Durchführen einer Strahlformer-Winkelmessung auf ein Ziel durch Suchen nach einem oder mehreren Winkeln des Ziels unter Verwendung der von den mehreren Summensignal-Erzeugungseinheiten (3-1 bis 3-N) erzeugten Summensignale und der von den mehreren Differenzsignal-Erzeugungseinheiten (4-1 bis 4-N) erzeugten Differenzsignale;

wobei die mehreren Summensignal-Erzeugungseinheiten (3-1 bis 3-N) die Summensignale durch Kombinieren der Signale der mehreren Elementantennen in einer solchen Weise erzeugen, dass die Signale der mehreren Elementantennen, welche jede der Subarray-Antennen (1-1 bis 1-N) aufweist, in einer Subarray-Strahlrichtung in Phase sind,

**dadurch gekennzeichnet, dass** die mehreren Differenzsignal-Erzeugungseinheiten (4-1 bis 4-N) jeweils ein erstes Summensignal erzeugen durch Unterteilen einer Apertur von jeder der Subarray-Antennen (1-1 bis 1-N) in zwei Teile, und Kombinieren von Signalen von mehreren Elementantennen für einen der zwei Teile, in welche die Apertur unterteilt ist, aus den mehreren Elementantennen, welche jede der Subarray-Antennen (1-1 bis 1-N) aufweist, derart, dass die Signale der mehreren Elementantennen für den einen der zwei Teile, in welche die Apertur unterteilt ist, in der Subarray-Strahlrichtung in Phase sind, und außerdem ein zweites Summensignals erzeugen durch Kombinieren von Signalen von mehreren Elementantennen für einen anderen der zwei Teile, in welche die Apertur unterteilt ist, aus den mehreren Elementantennen, welche jede der Subarray-Antennen (1-1 bis 1-N) aufweist, derart, dass die Signale der mehreren Elementantennen für den anderen der zwei Teile, in welche die Apertur unterteilt ist, in der Subarray-Strahlrichtung in Phase sind, und eine Differenz zwischen dem ersten Summensignal und dem zweiten Summensignal als das Differenzsignal berechnen, wobei die Subarray-Strahlrichtung veränderbar ist.

2. Radareinrichtung nach Anspruch 1, wobei die Radareinrichtung umfasst:

   eine Mehrstrahl-Erzeugungseinheit (12) zum Erzeugen mehrerer Strahlen aus den von den mehreren Summensignal-Erzeugungseinheiten (3-1 bis 3-N) erzeugten Summensignalen; und
   eine Zieldetektionseinheit (13) zum Durchführen eines Prozesses des Detektierens eines Ziels aus den von der Mehrstrahl-Erzeugungseinheit (12) erzeugten mehreren Strahlen, um das Vorhandensein oder Nichtvorhandensein eines Ziels zu bestimmen,
   wobei die Winkelmesseinheit (14) eine Strahlformer-Winkelmessung auf ein Ziel durchführt, falls ein Bestimmungsergebnis der Zieldetektionseinheit (13) zeigt, dass das Ziel vorhanden ist.

3. Radareinrichtung nach Anspruch 1, wobei die mehreren Differenzsignal-Erzeugungseinheiten (4-1 bis 4-N) jeweils mindestens eines umfassen von:

   einer Differenzsignal-Erzeugungseinheit für eine Elevationswinkelrichtung (5-1 bis 5-N), um beim Erzeugen von jedem von dem ersten und dem zweiten Summensignal ein Differenzsignal in einer Elevationswinkelrichtung durch Unterteilen der Apertur von jeder der Subarray-Antennen (1-1 bis 1-N) in zwei Teile in der Elevationswinkelrichtung zu erzeugen, und
   eine Differenzsignal-Erzeugungseinheit für die Azimutwinkelrichtung (6-1 bis 6-N), um beim Erzeugen von jedem von dem ersten und dem zweiten Summensignal ein Differenzsignal in einer Azimutwinkelrichtung durch Unterteilen der Apertur von jeder der Subarray-Antennen (1-1 bis 1-N) in zwei Teile in der Azimutwinkelrichtung zu erzeugen, und
   zumindest eines von dem Differenzsignal in der Elevationswinkelrichtung und dem Differenzsignal in Azimutwinkelrichtung an die Winkelmesseinheit (14; 53; 61) auszugeben.

4. Radareinrichtung nach Anspruch 1, wobei die Winkelmesseinheit (14) als die Strahlformer-Winkelmessung auf das Ziel, das Ziel innerhalb eines Subarray-Strahls sucht, der jeder der mehreren Subarray-Antennen (1-1 bis 1-N) entspricht, und eine Winkelmessung auf das Ziel unter Verwendung der von den mehreren Summensignal-Erzeugungseinheiten (3-1 bis 3-N) erzeugten Summensignale und der von den mehreren Differenzsignal-Erzeugungseinheiten (4-1 bis 4-N) erzeugten Differenzsignale durchführt.

5. Radareinrichtung nach Anspruch 1, wobei die Winkelmesseinheit (14) umfasst:

   eine erste Winkelmessungs-Verarbeitungseinheit (41) zum Durchführen einer Strahlformer-Winkelmessung auf das Ziel unter Verwendung der Summensignale, die von den mehreren Summensignal-Erzeugungseinheiten (3-1 bis 3-N) erzeugt werden, und der Differenzsignale, die von den mehreren Differenzsignal-Erzeugungseinheiten (4-1 bis 4-N) erzeugt werden, während eine Richtung des Suchens nach dem Ziel in Schritten einer ersten Schrittgröße innerhalb eines Subarray-Strahls entsprechend jeder der mehreren Subarray-Antennen (1-1 bis 1-N) geändert wird;
   eine Suchbereich-Festlegungseinheit (42) zum Festlegen eines Suchbereichs für das Ziel unter Verwendung eines Winkelmessergebnisses der ersten Winkelmessungs-Verarbeitungseinheit (41); und
   eine zweite Winkelmessungs-Verarbeitungseinheit (43) zum Durchführen einer Strahlformer-Winkelmessung auf das Ziel unter Verwendung der von den mehreren Summensignal-Erzeugungseinheiten (3-1 bis 3-N) erzeugten Summensignale und der von den mehreren Differenzsignal-Erzeugungseinheiten (4-1 bis 4-N) erzeugten Differenzsignale, während die Zielsuchrichtung in Schritten einer zweiten Schrittgröße, die feiner ist als die erste Schrittgröße, innerhalb des von der Suchbereich-Festlegungseinheit (42) festgelegten Suchbereichs geändert wird.

6. Radareinrichtung nach Anspruch 1, wobei die Radareinrichtung umfasst:

eine Mehrstrahl-Erzeugungseinheit (51) zur Erzeugung mehrerer Strahlen, digitale Mehrfachstrahlformung, DBF, Strahlen aus den von den mehreren Summensignal-Erzeugungseinheiten (3-1 bis 3-N) erzeugten Summensignalen und den von den mehreren Differenzsignal-Erzeugungseinheiten (4-1 bis 4-N) erzeugten Differenzsignalen; und

eine Zieldetektionseinheit (52) zum Durchführen eines Prozesses des Detektierens eines Ziels aus den von der Mehrstrahl-Erzeugungseinheit (51) erzeugten mehreren Strahlen und zum Spezifizieren eines DBF-Strahls, in dem ein detektiertes Ziel vorhanden ist, aus den mehreren DBF-Strahlen, und wobei die Winkelmesseinheit (53) eine Strahlreichweite des DBF-Strahls, welche durch die Zieldetektionseinheit (52) spezifiziert ist, als einen Suchbereichs für Ziele festlegt, und eine Strahlformer-Winkelmessung auf das Ziel innerhalb des Suchbereichs unter Verwendung der Summensignale, die durch die mehreren Summensignal-Erzeugungseinheiten (3-1 bis 3-N) erzeugt werden, und der Differenzsignale, die durch die mehreren Differenzsignal-Erzeugungseinheiten (4-1 bis 4-N) erzeugt werden, durchführt.

7. Radareinrichtung nach Anspruch 1, wobei die Winkelmesseinheit (61) eine Monopuls-Winkelmessung auf das Ziel durchführt, anstatt eine Strahlformer-Winkelmessung auf das Ziel durchzuführen, innerhalb eines Subarray-Strahls, der jeder der mehreren Subarray-Antennen (1-1 bis 1-N) entspricht, unter Verwendung der Summensignale, die von den mehreren Summensignal-Erzeugungseinheiten (3-1 bis 3-N) erzeugt werden, und der Differenzsignale, die von den mehreren Differenzsignal-Erzeugungseinheiten (4-1 bis 4-N) erzeugt werden, und führt eine gewichtete Mittelung auf ein Messergebnis der Monopuls-Winkelmessung innerhalb des Subarray-Strahls durch, der jeder der mehreren Subarray-Antennen (1-1 bis 1-N) entspricht.

8. Radareinrichtung nach Anspruch 7, wobei die Winkelmesseinheit (61) einen Suchbereich für das Ziel unter Verwendung eines Winkelmessergebnisses festlegt, auf das gewichtete Mittelung durchgeführt wird, und eine Strahlformer-Winkelmessung auf das Ziel innerhalb des Suchbereichs unter Verwendung der von den mehreren Summensignal-Erzeugungseinheiten (3-1 bis 3-N) erzeugten Summensignale durchführt.

9. Radareinrichtung nach Anspruch 1, wobei die mehreren Subarray-Antennen (1-1 bis 1-N) in ungleichen Abständen angeordnet sind.

10. Radareinrichtung nach Anspruch 1, wobei die Winkelmesseinheit (14; 53; 61) eine Winkelmessung entweder in einer Elevationswinkelrichtung des Ziels oder in einer Azimutwinkelrichtung des Ziels durchführt.

11. Radareinrichtung nach Anspruch 1, wobei die Winkelmesseinheit (14; 53; 61) eine Winkelmessung sowohl in einer Elevationswinkelrichtung des Ziels als auch in einer Azimutwinkelrichtung des Ziels durchführt.

12. Zielwinkel-Messungsverfahren, umfassend:

Erzeugen, durch mehrere Summensignal-Erzeugungseinheiten (3-1 bis 3-N), die jeweils mit mehreren Subarray-Antennen (1-1 bis 1-N), aufweisend mehrere Elementantennen, verbunden sind, eines Summensignals von Signalen der mehreren Elementantennen, welche jede der Subarray-Antennen (1-1 bis 1-N) aufweist;
Erzeugen, durch mehrere Differenzsignal-Erzeugungseinheiten (4-1 bis 4-N), die jeweils mit den mehreren Subarray-Antennen (1-1 bis 1-N) verbunden sind, eines Differenzsignals der Signale der mehreren Element-Antennen, welche jede der Subarray-Antennen (1-1 bis 1-N) aufweist; und
Durchführen, durch eine Winkelmesseinheit (14; 53; 61), einer Strahlformer-Winkelmessung auf ein Ziel durch Suchen nach einem oder mehreren Winkeln des Ziels unter Verwendung der Summensignale, die durch die mehreren Summensignal-Erzeugungseinheiten (3-1 bis 3-N) erzeugt werden, und der Differenzsignale, die durch die mehreren Differenzsignal-Erzeugungseinheiten (4-1 bis 4-N) erzeugt werden;
wobei die mehreren Summensignal-Erzeugungseinheiten (3-1 bis 3-N) die Summensignale durch Kombinieren der Signale der mehreren Elementantennen in einer solchen Weise erzeugen, dass die Signale der mehreren Elementantennen, welche jede der Subarray-Antennen (1-1 bis 1-N) aufweist, in einer Subarray-Strahlrichtung in Phase sind,
dadurch gekennzeichnet, dass die mehreren Differenzsignal-Erzeugungseinheiten (4-1 bis 4-N) jeweils ein erstes Summensignal erzeugen durch Unterteilen einer Apertur von jeder der Subarray-Antennen (1-1 bis 1-N) in zwei Teile, und Kombinieren von Signalen von mehreren Elementantennen für einen der zwei Teile, in welche die Apertur unterteilt ist, aus den mehreren Elementantennen, welche jede der Subarray-Antennen (1-1 bis 1-N) aufweist, derart, dass die Signale der mehreren Elementantennen für den einen der zwei Teile, in welche die Apertur unterteilt ist, in der Subarray-Strahlrichtung in Phase sind, und außerdem ein zweites Summensignals erzeugen durch Kombinieren von Signalen von mehreren Elementantennen für einen anderen der zwei Teile, in welche die Apertur unterteilt ist, aus den mehreren Elementantennen, welche jede der Subarray-Antennen (1-1 bis 1-N) aufweist, derart, dass die Signale der mehreren Elementantennen für den anderen der zwei Teile, in welche die Apertur unterteilt ist, in der Subarray-Strahlrichtung in Phase sind, und eine Differenz zwischen dem ersten Summensignal und dem zweiten Summensignal als das Differenzsignal berechnen, wobei die Subarray-Strahlrichtung veränderbar ist.

**Revendications**

1.  Dispositif radar comprenant :

    de multiples antennes de sous-réseau (1-1 à 1-N) ayant chacune de multiples antennes élémentaires ;
    de multiples unités de génération de signal de somme (3-1 à 3-N) respectivement connectées aux multiples antennes de sous-réseau (1-1 à 1-N), pour générer chacune un signal de somme de signaux des multiples antennes élémentaires que chacune des antennes de sous-réseau (1-1 à 1-N) possède ;
    de multiples unités de génération de signal de différence (4-1 à 4-N) respectivement connectées aux multiples antennes de sous-réseau (1-1 à 1-N), pour générer chacune un signal de différence des signaux des multiples antennes élémentaires (1-1 à 1-N) que possède chacune des antennes de sous-réseau (1-1 à 1-N) ; et
    une unité de mesure d'angle (14 ; 53 ; 61) pour effectuer une mesure d'angle de formation de faisceau sur une cible en recherchant un ou plusieurs angles de la cible en utilisant les signaux de somme générés par les multiples unités de génération de signal de somme (3-1 à 3-N) et les signaux de différence générés par les multiples unités de génération de signal de différence (4-1 à 4-N) ;
    dans lequel les multiples unités de génération de signal de somme (3-1 à 3-N) génèrent les signaux de somme en combinant les signaux des antennes élémentaires multiples d'une manière telle que les signaux des multiples antennes élémentaires que chacune des antennes de sous-réseau (1-1 à 1-N) possède sont en phase dans une direction de faisceau de sous-réseau,
    **caractérisé en ce que** les multiples unités de génération de signal de différence (4-1 à 4-N) génèrent chacune un premier signal de somme en divisant une ouverture de chacune des antennes de sous-réseau (1-1 à 1-N) en deux parties, et en combinant des signaux de multiples antennes élémentaires pour l'une des deux parties en lesquelles l'ouverture est divisée, parmi les multiples antennes élémentaires que possède chacune des antennes de sous-réseau (1-1 à 1-N), de telle sorte que les signaux des multiples antennes élémentaires pour l'une des deux parties en lesquelles l'ouverture est divisée sont en phase dans la direction du faisceau du sous-réseau et génèrent également un second signal de somme en combinant les signaux des multiples antennes élémentaires pour une autre des deux parties en lesquelles l'ouverture est divisée, à partir des antennes élémentaires multiples que chacune des antennes de sous-réseau (1-1 à 1-N) possède, de telle sorte que les signaux des multiples antennes élémentaires pour l'autre des deux parties dans lesquelles l'ouverture est divisée sont en phase dans la direction du faisceau de sous-réseau, et calculer une différence entre le premier signal de somme et le second signal de somme en tant que signal de différence, dans lequel la direction du faisceau de sous-réseau est modifiable.

2.  Dispositif radar selon la revendication 1, dans lequel le dispositif radar comprend :

    une unité de génération de faisceaux multiples (12) pour générer de multiples faisceaux à partir des signaux de somme générés par les multiples unités de génération de signal de somme (3-1 à 3-N) ; et
    une unité de détection de cible (13) pour exécuter un processus de détection d'une cible à partir des multiples faisceaux générés par l'unité de génération de faisceaux multiples (12), pour déterminer la présence ou l'absence d'une cible,
    dans lequel l'unité de mesure d'angle (14) effectue une mesure d'angle de formation de faisceau sur une cible si le résultat d'une détermination de l'unité de détection de cible (13) montre que la cible est présente.

3.  Dispositif radar selon la revendication 1, dans lequel les multiples unités de génération de signal de différence (4-1 à 4-N) comprennent chacune au moins l'un des éléments suivants :

    une unité de génération de signal de différence pour une direction d'angle d'élévation (5-1 à 5-N) pour générer, lors de la génération de chacun des premier et second signaux de somme, un signal de différence dans une direction d'angle d'élévation en divisant l'ouverture de chacune des antennes de sous-réseau (1-1 à 1-N) en deux parties dans la direction d'angle d'élévation, et
    une unité de génération de signal de différence pour une direction d'angle d'azimut (6-1 à 6-N) pour générer, lors de la génération de chacun des premier et second signaux de somme, un signal de différence dans une direction d'angle d'azimut en divisant l'ouverture de chacune des antennes de sous-réseau (1-1 à 1-N) en deux parties dans la direction d'angle d'azimut, et

rendre en sortie au moins un élément parmi le signal de différence dans la direction de l'angle d'élévation et le signal de différence dans la direction de l'angle d'azimut vers l'unité de mesure d'angle (14 ; 53 ; 61).

4. Dispositif radar selon la revendication 1, dans lequel l'unité de mesure d'angle (14), en tant que mesure d'angle de formation de faisceau sur la cible, recherche la cible dans un faisceau de sous-réseau correspondant à chacune des multiples antennes de sous-réseau (1-1 à 1-N) et effectue une mesure d'angle sur la cible, en utilisant les signaux de somme générés par les multiples unités de génération de signal de somme (3-1 à 3-N) et les signaux de différence générés par les multiples unités de génération de signal de différence (4-1 à 4-N).

5. Dispositif radar selon la revendication 1, dans lequel l'unité de mesure d'angle (14) comprend :

une première unité de traitement de mesure d'angle (41) pour effectuer une mesure d'angle de formation de faisceau sur la cible en utilisant les signaux de somme générés par les multiples unités de génération de signal de somme (3-1 à 3-N) et les signaux de différence générés par les multiples unités de génération de signal de différence (4-1 à 4-N), tout en changeant une direction de recherche de la cible par étapes d'une première taille de pas dans un faisceau de sous-réseau correspondant à chacune des multiples antennes de sous-réseau (1-1 à 1-N) ;

une unité d'établissement de portée de recherche (42) pour établir une portée de recherche pour la cible en utilisant un résultat de mesure d'angle de la première unité de traitement de mesure d'angle (41) ; et

une seconde unité de traitement de mesure d'angle (43) pour effectuer une mesure d'angle de formation de faisceau sur la cible en utilisant les signaux de somme générés par les multiples unités de génération de signal de somme (3-1 à 3-N) et les signaux de différence générés par les multiples unités de génération de signal de différence (4-1 à 4-N), tout en changeant la direction de recherche de la cible par étapes d'une seconde taille de pas plus fine que la première taille de pas dans le champ de recherche établi par l'unité d'établissement du champ de recherche (42).

6. Dispositif radar selon la revendication 1, dans lequel le dispositif radar comprend :

une unité de génération de faisceaux multiples (51) pour générer des faisceaux multiples comprenant des faisceaux multiples de formation de faisceau numérique, DBF, à partir des signaux de somme générés par les unités multiples de génération de signal de somme (3-1 à 3-N) et des signaux de différence générés par les unités multiples de génération de signal de différence (4-1 à 4-N) ; et

une unité de détection de cible (52) pour exécuter un processus de détection d'une cible à partir des multiples faisceaux générés par l'unité de génération de faisceaux multiples (51), et pour spécifier un faisceau DBF dans lequel une cible détectée est présente parmi les multiples faisceaux DBF,

et dans lequel l'unité de mesure d'angle (53) définit une plage de faisceau du faisceau DBF spécifiée par l'unité de détection de cible (52) comme une portée de recherche de cibles, et effectue une mesure d'angle de formation de faisceau sur la cible à l'intérieur de la portée de recherche, en utilisant les signaux de somme générés par les multiples unités de génération de signaux de somme (3-1 à 3-N) et les signaux de différence générés par les multiples unités de génération de signal de différence (4-1 à 4-N).

7. Dispositif radar selon la revendication 1, dans lequel l'unité de mesure d'angle (61) effectue une mesure d'angle monopulse sur la cible, au lieu d'effectuer une mesure d'angle de formation de faisceau sur la cible, à l'intérieur d'un faisceau de sous-réseau correspondant à chacune des multiples antennes de sous-réseau (1-1 à 1-N), en utilisant les signaux de somme générés par les multiples unités de génération de signal de somme (3-1 à 3-N) et les signaux de différence générés par les multiples unités de génération de signal de différence (4-1 à 4-N), et calcule une moyenne pondérée sur un résultat de mesure de la mesure d'angle monopulse dans le faisceau de sous-réseau correspondant à chacune des multiples antennes de sous-réseau (1-1 à 1-N).

8. Dispositif radar selon la revendication 7, dans lequel l'unité de mesure d'angle (61) établit un champ de recherche pour la cible en utilisant un résultat de mesure d'angle sur lequel la moyenne pondérée est calculée, et effectue une mesure d'angle de formation de faisceau sur la cible dans le champ de recherche en utilisant les signaux de somme générés par les multiples unités de génération de signal de somme (3-1 à 3-N).

9. Dispositif radar selon la revendication 1, dans lequel les multiples antennes de sous-réseau (1-1 à 1-N) sont disposées à des intervalles inégaux.

**10.** Dispositif radar selon la revendication 1, dans lequel l'unité de mesure d'angle (14 ; 53 ; 61) effectue une mesure d'angle soit dans une direction d'angle d'élévation de la cible, soit dans une direction d'angle d'azimut de la cible.

**11.** Dispositif radar selon la revendication 1, dans lequel l'unité de mesure d'angle (14 ; 53 ; 61) effectue une mesure d'angle à la fois dans une direction d'angle d'élévation de la cible et dans une direction d'angle d'azimut de la cible.

**12.** Procédé de mesure d'angle de cible comprenant :

générer, par de multiples unités de génération de signal de somme (3-1 à 3-N) respectivement connectées à de multiples antennes de sous-réseau (1-1 à 1-N) ayant de multiples antennes élémentaires, un signal de somme de signaux des multiples antennes élémentaires que chacune des antennes de sous-réseau (1-1 à 1-N) possède ;

générer, par de multiples unités de génération de signal de différence (4-1 à 4-N) respectivement connectées aux multiples antennes de sous-réseau (1-1 à 1-N), un signal de différence des signaux des multiples antennes élémentaires que chacune des antennes de sous-réseau possède (1-1 à 1-N) ; et

effectuer, par une unité de mesure d'angle (14 ; 53 ; 61), une mesure d'angle de formation de faisceau sur une cible en recherchant un ou plusieurs angles de la cible en utilisant les signaux de somme générés par les multiples unités de génération de signal de somme (3-1 à 3-N) et les signaux de différence générés par les multiples unités de génération de signal de différence (4-1 à 4-N) ;

dans lequel les multiples unités de génération de signal de somme (3-1 à 3-N) génèrent les signaux de somme en combinant les signaux des antennes élémentaires multiples d'une manière telle que les signaux des multiples antennes élémentaires que chacune des antennes de sous-réseau (1-1 à 1-N) possède sont en phase dans une direction de faisceau de sous-réseau,

**caractérisé en ce que** les multiples unités de génération de signal de différence (4-1 à 4-N) génèrent chacune un premier signal de somme en divisant une ouverture de chacune des antennes de sous-réseau (1-1 à 1-N) en deux parties, et en combinant des signaux de multiples antennes élémentaires pour l'une des deux parties en lesquelles l'ouverture est divisée, parmi les multiples antennes élémentaires que possède chacune des antennes de sous-réseau (1-1 à 1-N), de telle sorte que les signaux des multiples antennes élémentaires pour l'une des deux parties en lesquelles l'ouverture est divisée sont en phase dans la direction du faisceau du sous-réseau et génèrent également un second signal de somme en combinant les signaux des multiples antennes élémentaires pour une autre des deux parties en lesquelles l'ouverture est divisée, à partir des antennes élémentaires multiples que chacune des antennes de sous-réseau (1-1 à 1-N) possède, de telle sorte que les signaux des multiples antennes élémentaires pour l'autre des deux parties dans lesquelles l'ouverture est divisée sont en phase dans la direction du faisceau de sous-réseau, et calculer une différence entre le premier signal de somme et le second signal de somme en tant que signal de différence, dans lequel la direction du faisceau de sous-réseau est modifiable.

# FIG. 1

Distributed Array Antenna

1-1, 1-N — Antenna elements

2-1, 2-N — RF Unit

3-1, 3-N — Sum Signal Generation Unit

4-1, 4-N — Difference Signal Generation Unit

5-1, 5-N — Difference Signal Generation Unit for Elevation Angle Direction

6-1, 6-N — Difference Signal Generation Unit for Azimuth Angle Direction

7-1, 7-N — AD Converter

8-1, 8-N — AD Converter

9-1, 9-N — AD Converter

10 — Signal Processing Device

11 — Radar Signal Processing Unit

12 — Multibeam Generation Unit

13 — Target Detection Unit

14 — Angle Measurement Unit

$\Sigma_1 \sim \Sigma_N$

$\Delta_{ele,1} \sim \Delta_{ele,N}$

$\Delta_{azi,1} \sim \Delta_{azi,N}$

# FIG. 2

| Radar Signal Processing Circuit 21 | Multibeam Generation Circuit 22 |
|---|---|
| Target Detection Circuit 23 | Angle Measurement Circuit 24 |

# FIG. 3

| Memory 31 | Processor 32 |
|---|---|

# FIG. 4

```
            ( Start )
                │
                ▼
┌──────────────────────────────┐
│   Radar Signal Processing Unit│
│   Performs Various Types of   │ ─── ST1
│       Signal Processing       │
└──────────────────────────────┘
                │
                ▼
┌──────────────────────────────┐
│    Multibeam Generation Unit  │
│   Generates Multiple Beams by │ ─── ST2
│    Performing DBF Process on  │
│       Digital Sum Signals     │
└──────────────────────────────┘
                │
                ▼
┌──────────────────────────────┐
│      Target Detection Unit    │
│     Determines Presence or    │ ─── ST3
│       Absence of Target       │
└──────────────────────────────┘
                │
                ▼           ST4
          ◇────────────────◇
          │ Target is Present? │───── NO
          ◇────────────────◇              │
                │ YES                      │
                ▼                          │
┌──────────────────────────────┐          │
│ Angle Measurement Unit Performs│         │
│ Beamformer Angle Measurement  │ ─── ST5  │
│on Target Using Digital Sum Signals│      │
│ and Digital Difference Signals│          │
└──────────────────────────────┘          │
                │◄─────────────────────────┘
                ▼
             ( End )
```

# FIG. 5

|  | Beamformer Angle Measurement Using Only Sum Signals | Monopulse Angle Measurement in Subarray Aperture |
|---|---|---|
| Used Aperture | Distributed Aperture | Subarray Aperture |
| Influence of GL within Subarray Beam | There Is Influence Distribution of Errors Occurs in Direction of GL | There Is No Influence No GL Occurs |
| Distribution of Errors | Narrow | Wide |

EP 3 825 716 B1

# FIG. 6

Frequency of
Occurrence of Angle
Measurement
Value

Direction
of GL

True Direction
of Target

Direction
of GL

Beamformer Angle
Measurement Using
Only Sum Signals

Elevation Angle/
Azimuth Angle

Distribution
of Errors in
Direction
of GL

Distribution
of Errors in
Direction
of Target

Distribution
of Errors in
Direction
of GL

Monopulse Angle
Measurement in
Subarray Aperture

Elevation Angle/
Azimuth Angle

Distribution of Errors
in Direction of Target

Beamformer Angle
Measurement by
Angl Measurement
Unit 14

Elevation Angle/
Azimuth Angle

Distribution of Errors
in Direction of Target

Subarray Beam Width

FIG. 7

EP 3 825 716 B1

FIG. 8

**Distributed Array Antenna**

1 — 1-1 ΥΥΥ ............... 1-N ΥΥΥ 1-N

RF Unit 2-1 ............... 2-N RF Unit

3-1 Sum Signal Generation Unit

5-1 Difference Signal Generation Unit for Elevation Angle Direction

4-1 Difference Signal Generation Unit

3-N Sum Signal Generation Unit

5-N Difference Signal Generation Unit for Elevation Angle Direction

4-N Difference Signal Generation Unit

7-1 AD Converter

8-1 AD Converter

7-N AD Converter

8-N AD Converter

10

11 Radar Signal Processing Unit

$\Sigma_1 \sim \Sigma_N$

12 Multibeam Generation Unit

$\Sigma_1 \sim \Sigma_N$

$\Delta_{ele,1} \sim \Delta_{ele,N}$
$\Delta_{azi,1} \sim \Delta_{azi,N}$

14 Angle Measurement Unit

13 Target Detection Unit

Signal Processing Device

EP 3 825 716 B1

# FIG. 9

FIG. 10

EP 3 825 716 B1

# FIG. 11

Distributed Array Antenna

Sum Signal Generation Unit

Difference Signal Generation Unit for Elevation Angle Direction

Difference Signal Generation Unit for Azimuth Angle Direction

AD Converter

Signal Processing Device

Radar Signal Processing Unit

$\Sigma_1 \sim \Sigma_N$

$\Delta_{ele,1} \sim \Delta_{ele,N}$
$\Delta_{azi,1} \sim \Delta_{azi,N}$

Multibeam Generation Unit

Target Detection Unit

Angle Measurement Unit

Monopulse Angle Measurement Processing Unit

Average Processing Unit

EP 3 825 716 B1

# FIG. 12

EP 3 825 716 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6697009 B2

- JP 2002189071 A

**Non-patent literature cited in the description**

- **R.C. HEIMILLER ; J.E. BELYEA ; P.G. TOMLINSON.** *Distributed Array Radar*
- **NOBUYOSHI KIKUMA.** Adaptive Antenna Technique. Ohmsha, Ltd, 2003

- **TAKASHI YOSHIDA.** Revised Radar Technique. Corona Publishing Co., Ltd, 1996